# EUROPÄISCHE PATENTSCHRIFT

(11) **EP 2 389 644 B1**
(45) Veröffentlichungstag und Bekanntmachung des Hinweises auf die Patenterteilung: **03.05.2017**
(21) Anmeldenummer: 10704521.3
(22) Anmeldetag: 21.01.2010
(51) Int. Cl.: G06F 21/31, G06F 21/34, G06F 21/44

(54) **VERFAHREN ZUR FREISCHALTUNG EINER CHIPKARTENFUNKTION UND LESEGERÄT FÜR EINE CHIPKARTE**
METHOD FOR UNLOCKING A CHIP CARD FUNCTION AND READER FOR A CHIP CARD
PROCÉDÉ DE DÉVERROUILLAGE D'UNE FONCTION DE CARTE À PUCE, ET LECTEUR DE CARTE

(30) Priorität: 26.01.2009 DE 102009000404
(43) Veröffentlichungstag der Anmeldung: 30.11.2011
(73) Patentinhaber: Bundesdruckerei GmbH, 10958 Berlin (DE)
(72) Erfinder: SCHOLZE, Steffen, 10249 Berlin (DE)
(74) Vertreter: Richardt Patentanwälte PartG mbB
(86) Internationale Anmeldenummer: PCT/EP2010/050664
(87) Internationale Veröffentlichungsnummer: WO 2010/084142

(56) Entgegenhaltungen:
- EP-A2- 1 686 541
- WO-A1-01/86584
- WO-A1-2009/089943
- DE-A1- 19 850 307
- US-A1- 2006 039 564
- Federal Office for Information Security (BSI): "Technical Guideline TR-03110 Advanced Security Mechanisms for Machine Readable Travel Documents - Extended Access Control (EAC). Version 2.0 - Public Beta 3" INTERNET CITATION 1. Januar 2008 (2008-01-01), Seiten 1-89, XP002565918 [gefunden am 2010-01-22]
- JAN EICHHOLZ ET AL: 'ISO/IEC 24727 for secure mobile web applications', [Online] 30 Oktober 2008, XP055099634 Gefunden im Internet: <URL:http://www.w3.org/2008/security-ws/pap ers/ISO24727-for-secure-mobile-web-applicat ions-2008-10-30.pdf> [gefunden am 2014-01-31]

## Beschreibung

Die Erfindung betrifft ein Verfahren zur Freischaltung einer Chipkartenfunktion und ein Lesegerät für eine Chipkarte.

Für die Freischaltung einer Chipkarten-Funktion kann eine zuvorige Authentisierung des Benutzers gegenüber der Chipkarte erforderlich sein, wie es aus dem Stand der Technik an sich bekannt ist. Hierzu kann der Benutzer Authentisierungsdaten über ein Lesegerät in die Chipkarte eingeben. Beispielsweise erfolgt dies durch die Eingabe einer geheimen Kennung, welche im Allgemeinen als PIN (Personal Identification Number) bezeichnet wird.

Zur Benutzerauthentisierung wird die PIN von dem Benutzer auf der Tastatur eines Chipkarten-Terminals oder eines Computers, an den ein Chipkarten-Leser angeschlossen ist, eingegeben, und dann zu der Chipkarte gesendet. Diese vergleicht die eingegebene PIN mit der gespeicherten PIN und teilt dann das Ergebnis dem Terminal bzw. dem Computer durch Ausgabe eines entsprechenden Signals mit.

Es gibt Anwendungen auf Chipkarten, die eine Erstnutzerfunktion, insbesondere Transport-PINs verwenden. Die Chipkarte wird mit einer zufälligen PIN personalisiert, welche der Kartenbenutzer in einem PIN-Brief erhält. Bei der ersten Eingabe wird er aber von der Chipkarte dazu aufgefordert, die personalisierte PIN durch seine eigene zu ersetzen. Bei einem ähnlichen Verfahren, "Null-PIN-Verfahren" genannt, wird die Chipkarte mit einer Trivial-PIN, wie etwa "0000" vorbelegt, und es wird ebenfalls von der Chipkarte bei der ersten Benutzung ein Wechsel erzwungen (vgl. hierzu auch DE 35 23 237 A1, DE 195 07 043 A1, DE 195 07 044 C2, DE 198 50 307 C2, EP 0 730 253 B1).

Aus der DE 198 50 307 C2 ist ein Verfahren zum Schutz vor Missbrauch bei Chipkarten bekannt. Die Chipkarte hat eine Erstnutzerfunktion, die bei der erstmaligen Benutzung der Daten und/oder Funktionen der Chipkarte die Vorgabe einer vom Benutzer beliebig wählbaren, persönlichen Geheimzahl (PIN) fordert, wobei durch die Eingabe der persönlichen Geheimzahl Daten und/oder Funktionen der Chipkarte automatisch in einen Benutzt-Status gesetzt werden. Dieses Verfahren wird auch als "Leer-PIN-Verfahren" bezeichnet. Eine spätere Änderung der persönlichen Geheimzahl wird durch einen übergeordneten Entsperrcode ermöglicht.

Aus dem Stand der Technik ist es ferner bekannt, dass sich ein Benutzer gegenüber der Chipkarte mit Hilfe eines biometrischen Merkmals authentifizieren kann. Hierzu wird ein biometrisches Merkmal, wie zum Beispiel ein Fingerabdruck des Benutzers, erfasst und die daraus resultierenden biometrischen Daten werden mit auf der Chipkarte gespeicherten Referenzdaten verglichen. Bei hinreichender Übereinstimmung gilt der Benutzer als authentifiziert. Wenn ein solches Verfahren auf der Chipkarte selbst abläuft, so spricht man auch von "Match-on-Card"-Verfahren. Ein solches Verfahren ist beispielsweise aus US 7,278,025 B2 bekannt.

Die technische Richtlinie TR-03110 "Advanced Security Mechanisms for Machine Readable Travel Documents - Extended Access Control (EAC). Version 2.0 - Public Beta 3" des Bundesamts für Sicherheit in der Informationstechnik (BSI) offenbart ein Verfahren zur Freischaltung einer Chipkartenfunktion durch ein Lesegerät einschließlich der Übertragung von Authentisierungsdaten des Benutzers.

Weiterhin kombiniert die Druckschrift WO 01/086584 A1 PIN-gestützte und auf Biometrie basierende Sicherungssysteme, indem aus den ermittelten biometrischen Rohdaten nur eindeutig reproduzierbare charakteristische Daten abgeleitet werden. Daraus wird ein Schlüsseldatensatz erzeugt, der entweder den PIN-Code darstellt oder aus dem der PIN-Code generiert werden kann. Der PIN-Code ist somit immer eindeutig anhand der biometrischen Daten reproduzierbar.

Schließlich offenbart die Druckschrift US 2006 039564 A1 eine Sicherheitslösung in einem Betreibernetz auf der Grundlage von SIM/Smartcards. Dabei werden den mobilen Endgeräten Zertifikate zur Authentifizierung der Server übermittelt. Ein Wurzelzertifikat ist in der SIM/Smartcard jedes mobilen Endgeräts gespeichert und wird von der elektronischen Schaltung geprüft, wenn die SIM/Smartcard in ein Lesegerät eingesetzt wird. In einer typischen Open Mobile Alliance (OMA) Umgebung sind Server zur Endgeräteverwaltung (MD) Server der sog. Mobile Variance Platform (MVP) mit Zertifikaten ausgestattet, die auf ein jeweiliges Wurzeizertifikat verweisen. Die mobilen Endgeräte authentifizieren jede Sitzung eines Servers durch Überprüfung der Server Zertifikate anhand der Wurzelzertifikate.
Der Erfindung liegt demgegenüber die Aufgabe zugrunde, ein verbessertes Verfahren zur Freischaltung einer Chipkartenfunktion sowie ein Lesegerät für ein Chipkarte zu schaffen.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Nach Ausführungsformen der Erfindung wird ein Verfahren zur Freischaltung einer Chipkartenfunktion geschaffen, um eine Nutzung der Chipkartenfunktion durch einen an das Lesegerät angeschlossenen Computer zu ermöglichen. Von einem Benutzer werden Authentisierungsdaten mit Hilfe eines Lesegeräts erfasst. Bei den Authentisierungsdaten kann es sich um eine Kennung, d.h. insbesondere um eine so genannte PIN, handeln. Die Kennung kann von dem Benutzer über eine Tastatur in das Lesegerät eingegeben werden. Alternativ hat das Lesegerät Erfassungsmittel zur Erfassung biometrischen Daten von dem Benutzer, wie zum Beispiel einen Fingerabdrucksensor, einen Sensor zur Erfassung einer Gesichtsgeometrie, einen Sensor zur Erfassung eines Irisscan oder einen Sensor zur Erfassung eines Merkmals der Stimme des Benutzers. Mit Hilfe eines solchen Sensors werden also biometrische Daten des Benutzers erfasst und mit Hilfe von Ableitungsmitteln wird aus den biometrischen Daten die Kennung abgeleitet. Die Ableitung der Kennung aus den biometrischen Daten kann mit Hilfe einer Einwegfunktion durchgeführt werden, insbesondere mit Hilfe einer biometrischen HASH-Funktion. Die so durch Eingabe der Kennung über eine Tastatur oder durch sensorische Erfassung biometrischer Daten von dem Benutzer erfassten Authentisierungsdaten werden von dem Lesegerät an die Chipkarte übertragen. Eine Freischaltung der Chipkartenfunktion durch die Chipkarte setzt voraus, dass die Authentisierungsdaten, die die Chipkarte von dem Lesegerät empfängt, mit in der Chipkarte gespeicherten Referenzdaten übereinstimmen. Eine zusätzliche notwendige Voraussetzung für die Freischaltung der Chipkartenfunktion ist, dass sich zumindest das Lesegerät gegenüber der Chipkarte kryptografisch authentisiert. Zur Prüfung der Authentifizierungsdaten wird von dem Lesegerät eine Information an die Chipkarte übertragen, die spezifiziert, wie die Erfassung der Authentisierungsdaten erfolgt. Die Freischaltung der Chipkartenfunktion durch die Chipkarte setzt voraus, dass die durch die Information spezifizierte Erfassung der Authentisierungsdaten von dem Benutzer durch das Lesegerät eine Anforderung der Chipkarte erfüllt. Insbesondere überträgt das Lesegerät für die kryptografische Authentisierung gegenüber der Chipkarte ein Zertifikat an die Chipkarte, das aus verschiedenen in dem Speicher gespeicherten Zertifikaten ausgewählt ist, wobei die gespeicherten Zertifikate über eine Zuordnungstabelle jeweils einem Chipkartentyp zugeordnet sind und sich durch die darin beinhaltete Information hinsichtlich der Art und Weise der Erfassung der Authentisierungsdaten unterscheiden. Weiterhin werden die Authentisierungsdaten durch das Lesegerät in der Weise erfasst, die durch die in dem ausgewählten Zertifikat beinhaltete Information spezifiziert ist.

Dies ist besonders vorteilhaft, da die Chipkarte auf diese Art und Weise prüfen kann, dass es sich bei dem Lesegerät um eine vertrauenswürdige Quelle der Authentisierungsdaten handelt. Dies ist insbesondere dann vorteilhaft, wenn es sich bei der Chipkartenfunktion um eine sicherheitskritische Funktion handelt, wie zum Beispiel eine Signaturfunktion der Chipkarte, um eine elektronische Signatur zu generieren. Insbesondere kann dadurch verhindert werden, dass zur Freischaltung der Chipkarte ein manipuliertes Lesegerät eingesetzt wird, in dem beispielsweise eine von dem Benutzer auf unautorisierte Art und Weise erlangte Kopie der Authentisierungsdaten gespeichert ist, um damit die Chipkarte freizuschalten.

Die Reihenfolge der einzelnen Schritte von Ausführungsformen des erfindungsgemäßen Verfahrens sind dabei nicht erfindungswesentlich:
Beispielsweise kann die Erfassung der Authentisierungsdaten vor oder nach der kryptographischen Authentisierung des Lesegeräts gegenüber der Chipkarte erfolgen. Ebenso kann die Übertragung der Authentisierungsdaten vor oder nach der kryptographischen Authentisierung des Lesegeräts erfolgen.

Nach einer Ausführungsform der Erfindung wird der Schritt der Erfassung und/oder Übertragung der Authentisierungsdaten in Abhängigkeit von der erfolgreichen kryptographische Authentisierung des Lesegeräts gegenüber der Chipkarte durchgeführt, d.h. die Schritte der Erfassung und/oder Übertragung der Authentisierungsdaten des Benutzers werden nur dann durchgeführt, wenn die kryptographische Authentisierung des Lesegeräts gegenüber der Chipkarte erfolgreich durchgeführt worden ist.

Nach einer Ausführungsform der Erfindung erfolgt eine gegenseitige kryptografische Authentisierung des Lesegeräts und der Chipkarte. Die kryptografische Authentisierung der Chipkarte gegenüber dem Lesegerät ist insbesondere vorteilhaft für Anwendungen der Chipkarte im Bereich der Zugangskontrolle, beispielsweise zu geschützten Gebäudebereichen, zu Computernetzwerken oder dergleichen. Aufgrund der kryptografischen Authentisierung der Chipkarte kann das Lesegerät prüfen, ob es sich bei der Chipkarte um eine vertrauenswürdige Datenquelle handelt. Dadurch wird der Einsatz von manipulierten Chipkarten unterbunden, die sonst einen unautorisierten Zugang ermöglichen könnten.

Nach einer Ausführungsform der Erfindung erfolgt die einseitige oder gegenseitige kryptografische Authentisierung mit Hilfe eines Challenge-Response-Verfahrens. Das Challenge-Response-Verfahren kann mit Hilfe eines symmetrischen Schlüssels und/oder eines asymmetrischen Schlüsselpaars durchgeführt werden.

Nach einer Ausführungsform der Erfindung überträgt das Lesegerät an die Chipkarte eine Information, um zu spezifizieren, auf welche Art und Weise die Erfassung der Authentisierungsdaten erfolgt. Durch die Information kann also spezifiziert werden, dass die Erfassung der Authentisierungsdaten durch Eingabe einer PIN über die Tastatur des Lesegeräts erfolgt oder dass die Erfassung der Authentisierungsdaten durch Erfassung biometrischer Daten und der Ableitung der PIN aus den biometrischen Daten mit Hilfe einer biometrischen HASH-Funktion erfolgt. In dem letzteren Fall kann die Information auch spezifizieren, welche biometrische HASH-Funktion zum Einsatz kommt, insbesondere welche Version der biometrischen HASH-Funktion verwendet wird.

Die Chipkarte überprüft dann, ob die durch die Information spezifizierte Art und Weise der Erfassung der Authentisierungsdaten die Anforderungen der Chipkarte an eine sichere Erfassung der Authentisierungsdaten erfüllt. Beispielsweise kann als Anforderung der Chipkarte vorgegeben sein, dass für die Erfassung der Authentisierungsdaten ein bestimmtes biometrisches Merkmal des Benutzers erfasst werden muss und/oder dass eine bestimmte biometrische HASH-Funktion zur Ableitung der PIN aus den biometrischen Daten verwendet werden muss und/oder dass eine bestimmte Programmversion der biometrischen HASH-Funktion hierfür verwendet werden muss. Die Freischaltung der Chipkartenfunktion erfolgt in diesem Fall nur unter der zusätzlichen Voraussetzung, dass die Anforderungen der Chipkarte an die Art und Weise der Erfassung der Authentisierungsdaten erfüllt sind.

Nach einer Ausführungsform der Erfindung ist die Information, welche die Art und Weise der Erfassung der Authentisierungsdaten von dem Benutzer spezifiziert, in einem Zertifikat des Lesegeräts gespeichert. Bei dem Zertifikat handelt es sich um ein Zertifikat einer Public Key Infrastructure (PKI), durch welches das Lesegerät eine Identität erhält. In dem Zertifikat können auch Rechte des Lesegeräts spezifiziert sein, beispielsweise das Recht zur Freischaltung einer bestimmten Chipkartenfunktion der Chipkarte. Im letzteren Fall erfolgt eine Freischaltung der Chipkartenfunktion durch die Chipkarte nur dann, wenn als zusätzliche Bedingung erfüllt ist, dass in dem Zertifikat das Recht zur Freischaltung dieser Chipkartenfunktion für das Lesegerät spezifiziert ist. Das Lesegerät kann das Zertifikat an die Chipkarte übertragen, um die kryptographische Authentisierung gegenüber der Chipkarte vorzunehmen.

Ausführungsformen der Erfindung sind besonders vorteilhaft, da es ermöglicht wird, Merkmale der PIN-basierten Verifikation mit einer biometrischen Benutzerverifikation auf sichere Art und Weise zu verknüpfen.

Unter einer "Chipkarte" wird hier jedes Dokument verstanden, welches einen Chip, d.h. eine integrierte elektronische Schaltung, beinhaltet, wobei das Dokument zum Beispiel Kunststoff- und/oder Papier-basiert sein kann. Bei der Chipkarte kann es sich um ein Wert- oder Sicherheitsdokument, wie zum Beispiel um ein ID-Dokument, d.h. ein Ausweisdokument, wie zum Beispiel einen Personalausweis, Reisepass, Führerschein, Fahrzeugbrief, Fahrzeugschein oder Firmenausweis, oder ein Zahlungsmittel, wie zum Beispiel eine Banknote, eine Kreditkarte oder einen sonstigen Berechtigungsnachweis, wie zum Beispiel eine Eintrittskarte, einen Frachtbrief, ein Visum oder dergleichen, handeln. Unter einer Chipkarte wird erfindungsgemäß auch ein Dokument verstanden, welches buchartig ausgebildet ist, wie dies zum Beispiel bei einem Reisepass der Fall ist. Unter einer Chipkarte wird erfindungsgemäß auch ein sogenanntes Funketikett verstanden, welches auch als RFID-Tag oder RFID-Label bezeichnet wird. Unter einem Chip wird erfindungsgemäß auch eine integrierte elektronische Schaltung verstanden, die ganz oder teilweise drucktechnisch aufgebracht ist, wie z.B. mittels leitfähiger Tinte. Die Übertragung der Signale und Daten und ggf. auch der Stromversorgung der Chipkarte können auf kontaktbehaftete als auch kontaktlose (berührungslose) Art mittels elektromagnetischer Wellen erfolgen, z.B. so wie dies derzeit für Chipkarten Stand der Technik ist.

Ausführungsformen eines erfindungsgemäßen Lesegeräts haben Erfassungsmittel zur Erfassung von Authentisierungsdaten, insbesondere biometrischer Daten, von einem Benutzer. Die Erfassungsmittel können ein oder mehrere biometrische Sensoren zur Erfassung der biometrischen Daten aufweisen. Beispielsweise können die Erfassungsmittel einen einzelnen biometrischen Sensor zur Erfassung eines bestimmten biometrischen Merkmals, wie zum Beispiel eines Fingerabdrucks, eines Iris-Scans, einer Gesichtsgeometrie oder eines Merkmals der Stimme des Benutzers aufweisen. Alternativ können die Erfassungsmittel zwei oder mehrere verschiedene Sensoren zur Erfassung jeweils unterschiedlicher biometrischer Merkmale aufweisen.

Mit Hilfe von Ableitungsmitteln des Lesegeräts wird aus den sensorisch erfassten biometrischen Daten die Kennung abgeleitet. Beispielsweise sind die Ableitungsmittel zur Ausführung einer sogenannten Einwegfunktion ("One-Way-Funktion") ausgebildet, welche auf die biometrischen Daten angewendet wird. Insbesondere kann es sich bei der Einwegfunktion um eine sogenannte HASH-Funktion handeln, welche auf die biometrischen Daten angewendet wird, um die Kennung daraus abzuleiten. Hierzu geeignete HASH-Funktionen sind an sich aus dem Stand der Technik bekannt und werden auch als biometric HASH oder BioHASH Funktionen bezeichnet, vergleiche hierzu beispielsweise "Cancellable biometrics and annotations on BioHash", Pattern Recognition, Volume 41, Issue 6, June 2008, Pages 2034-2044*;* Andrew B.J. Teoh, Yip Wai Kuan and Sangyoun Lee ; "A Secure Biometric Authentication Scheme Based on Robust Hashing" Yagiz Sutcu Husrev, Taha Sencar, Nasir Memon, (http://isis.poly.edu/~biomet/yagiz05biometric.pdf).

Nach einer Ausführungsform der Erfindung beinhalten die Ableitungsmittel einen Prozessor, der durch Instruktionen aus einem Programmspeicher gesteuert wird, um aus den Eingangsdaten, d.h. den sensorisch erfassten biometrischen Daten, Ausgangsdaten, d.h. die Kennung, abzuleiten.

Das Lesegerät verfügt ferner über Freischaltungsmittel zur Freischaltung einer Chipkartenfunktion mit Hilfe der Kennung. Die Freischaltungsmittel können dabei so ausgebildet sein, dass die Kennung im Klartext von dem Lesegerät an die Chipkarte übertragen wird, sodass die Chipkarte die Kennung mit in der Chipkarte gespeicherten Referenzdaten vergleichen kann. Wenn die von dem Lesegerät empfangene Kennung mit den in der Chipkarte gespeicherten Referenzdaten übereinstimmt, so schaltet die Chipkarte die betreffende Chipkartenfunktion frei, wobei eine Freischaltung der Chipkartenfunktion die erfolgreiche kryptografische Authentisierung des Lesegeräts gegenüber der Chipkarte voraussetzt.

Die Freischaltungsmittel können auch so ausgebildet sein, dass die Freischaltung der Chipkartenfunktion mittels einer Fernüberprüfung erfolgt. Unter einer "Fernüberprüfung" wird hier jedes Verfahren verstanden, bei dem die zu überprüfende Kennung nicht in die Chipkarte eingegeben werden muss, um sie mit der dort gespeicherten Kennung zu vergleichen, sondern bei dem die Überprüfung mittels eines den Kartenleser und die Chipkarte involvierenden Protokolls erfolgt. Entsprechende Protokolle sind an sich aus dem Stand der Technik bekannt, wie zum Beispiel Strong Password Only Authentication Key Exchange (SPEKE), Diffie-Hellman Encrypted Key Exchange (DH-EKE), Bellovin-Merritt Protokoll, Extended Access Control (EAC) oder Password Authenticated Connection Establishment (PACE).

Das SPEKE-Protokoll ist beispielsweise bekannt aus www.jablon.org/speke97.html, US 6,792,533 B2 und US 7,139,917 B2. Unter anderem ebenfalls aus www.jablon.org/speke97.html ist das DH-EKE-Protokoll bekannt. Unter anderem aus US 5,241,599 ist das Bellovin-Merritt-Protokoll bekannt.

Aus "Advanced Security Mechanisms for Machine Readable Travel Documents - Extended Access Control (EAC), Password Authenticated Connection Establishment (PACE), and Restricted Identification (RI)" Version 2.0, Bundesamt für Sicherheit in der Informationstechnik, (http://www.bsi.bund.de/english/pubiications/techguidelines/tr03110/TR-03110 v200.pdf) sind ferner EAC und PACE Verfahren bekannt.

Die Anwendung solcher Verfahren für die Fernüberprüfung ist insbesondere für Chipkarten mit einer drahtlosen Schnittstelle zu dem Lesegerät vorteilhaft, da hierbei die Kennung nicht von dem Lesegerät an die Chipkarte übertragen werden muss, sodass auch kein Ausspähen der Kennung möglich ist.

Nach einer Ausführungsform der Erfindung beinhalten die Freischaltungsmittel einen Prozessor, der durch Instruktionen aus einem Programmspeicher gesteuert wird, um mit Hilfe der Kennung über eine Schnittstelle des Lesegeräts zu der Chipkarte eine Chipkartenfunktion freizuschalten.

Das Lesegerät hat ferner Kommunikationsmittel zur Ermöglichung einer Kommunikation zwischen einem Computer und der Chipkarte zur Nutzung der Chipkartenfunktion. Beispielsweise handelt es sich bei dem Computer um einen üblichen Personalcomputer. Der Computer hat eine Schnittstelle, wie zum Beispiel eine USB-Schnittstelle, LAN, WLAN oder dergleichen, an die das Lesegerät angeschlossen werden kann. Mit anderen Worten kann das Lesegerät dazu ausgebildet sein, einem daran angeschlossenen Computer eine, vorzugsweise transparente, Kommunikation mit einer Chipkarte zu ermöglichen, wobei der Computer und die Chipkarte über eine der zuvor genannten Schnittstellen mit dem Lesegerät gekoppelt sind.

Nach einer Ausführungsform der Erfindung beinhalten die Kommunikationsmittel eine Schnittstelle zu der Chipkarte und eine weitere Schnittstelle zur Kommunikation mit einem Computer, so dass eine Kommunikation zwischen dem Computer und der Chipkarte ermöglicht wird. Ein entsprechender Kommunikationskanal zwischen dem Computer und der Chipkarte kann durch einen Prozessor des Lesegeräts aufgebaut werden, indem der Prozessor durch Instruktionen aus einem Programmspeicher gesteuert wird.

Nach einer Ausführungsform der Erfindung handelt es sich bei der Kennung um eine PIN. Die Kennung kann auch Buchstaben und/oder Sonderzeichen beinhalten.

Nach einer Ausführungsform der Erfindung hat das Lesegerät Prüfungsmittel zur Prüfung, ob sich die Chipkarte in einem Erstbenutzungsstatus befindet. Die Prüfungsmittel können so ausgebildet sein, dass ein Chipkartenkommando generiert und an die Chipkarte gesendet wird, um von der Chipkarte deren Status abzufragen, d.h. ob sich die Chipkarte in deren Erstbenutzungsstatus oder in deren Benutzt-Status befindet.

Unter einem "Erstbenutzungsstatus" wird hier ein erster Status der Chipkarte verstanden, wonach die Chipkarte nicht von einem hierzu nicht autorisierten Dritten verwendet worden ist. Unter einem "Benutztstatus" wird hier ein zweiter Status der Chipkarte verstanden, wonach die Chipkarte in Benutzung genommen worden ist, beispielsweise indem eine PIN von dem Benutzer gewählt und in die Chipkarte eingegeben worden ist. Unter einer "Erstbenutzungsfunktion" wird hier eine Funktion der Chipkarte verstanden, die die Bedingungen für den Übergang der Chipkarte von dem Erstbenutzungsstatus in den Benutztstatus festlegt.

Nach einer Ausführungsform der Erfindung hat die Chipkarte ein Speicherregister zur Speicherung eines Wertes, der angibt, ob sich die Chipkarte in dem Erstbenutzungsstatus oder in dem Benutztstatus befindet.

Nach einer Ausführungsform der Erfindung wird die Erstbenutzungsfunktion durch Programminstruktionen z.B. eines Betriebssystems der Chipkarte realisiert. Durch Ausführung der Programminstruktionen durch einen Prozessor der Chipkarte kann auf das Speicherregister zugegriffen werden, um den Status der Chipkarte von dem Erstbenutzungsstatus in den Benutztstatus zu überführen, wenn die hierfür durch die Erstbenutzungsfunktion vorgegebenen Bedingungen erfüllt sind.

Nach einer Ausführungsform der Erfindung beinhalten die Prüfungsmittel einen Prozessor, der durch Instruktionen aus einem Programmspeicher gesteuert wird, um zu Prüfen, ob sich die Chipkarte in einem Erstbenutzungsstatus befindet.

Wenn sich die Chipkarte in dem Erstbenutzungsstatus befindet, so erfolgt eine Überführung der Chipkarte von dem Erstbenutzungsstatus in den Benutzt-Status durch das Lesegerät. Dies kann so erfolgen, dass zunächst die biometrischen Daten von dem Benutzer durch die Erfassungsmittel erfasst werden, und dass aus diesen biometrischen Daten dann mit Hilfe der Ableitungsmittel die Authentisierungsdaten, d.h. z.B. die Kennung, abgeleitet werden. Die Kennung wird dann durch Überführungsmittel des Lesegeräts von dem Lesegerät an die Chipkarte als initiale Authentisierungsdaten übertragen, um die Chipkarte von ihrem Erstbenutzungsstatus in den Benutzt-Status zu überführen. Beispielsweise ersetzt diese Kennung eine herstellerseitig in der Chipkarte gespeicherte Kennung , wie z.B. eine PIN, wie zum Beispiel eine sogenannte 0-PIN, oder es wird auf diese Art und Weise erstmalig eine Kennung für die Chipkarte definiert, insbesondere bei Anwendung des sogenannten Leer-PIN-Verfahrens.

Nach einer Ausführungsform der Erfindung beinhalten die Überführungsmittel einen Prozessor, der durch Instruktionen aus einem Programmspeicher gesteuert wird, um die Chipkarte von ihrem Erstbenutzungsstatus in den Benutzt-Status zu überführen. Nach einer Ausführungsform der Erfindung hat das Lesegerät eine Anzeigevorrichtung. Insbesondere wenn sich die Chipkarte zunächst in dem Erstbenutzungsstatus befindet, wird die aus den biometrischen Daten des Benutzers abgeleitete Kennung auf der Anzeigevorrichtung angezeigt, sodass der Benutzer die Kennung ablesen kann, um sich die Kennung zu merken. Beispielsweise hat das Lesegerät ein Bedienelement aufgrund dessen Betätigung die auf der Anzeigevorrichtung angezeigte Kennung dann zu der Chipkarte übertragen wird, um sie mit Hilfe dieser Kennung von dem Erstbenutzungsstatus in den Benutzt-Status zu überführen. Die Anzeige der Kennung anlässlich der Inbenutzungnahme der Chipkarte hat für den Benutzer den Vorteil, dass er damit Kenntnis von dieser Kennung erlangt, sodass er die Chipkarte auch mit einem Standard-Lesegerät verwenden kann, welches die Eingabe der Kennung über eine übliche Tastatur erfordert.

Nach einer Ausführungsform der Erfindung haben die Ableitungsmittel einen Programmspeicher zur Speicherung von Programminstruktionen, durch welche eine Berechnung der Kennung aus einem oder mehreren biometrischen Merkmalen, beispielsweise eine One-Way-Funktion, implementiert wird. Das Lesegerät hat ferner Aktualisierungsmittel zum Empfang von Aktualisierungsdaten, beispielsweise von dem Computer, um mit Hilfe dieser Aktualisierungsdaten die Programminstruktionen zu aktualisieren. Hierdurch wird es ermöglicht, die One-Way-Funktion zu verbessern oder durch eine andere One-Way-Funktion zu ersetzen, um beispielsweise gestiegenen Sicherheitsanforderungen Rechnung zu tragen.

Nach einer Ausführungsform der Erfindung wird die Authentizität und/oder die Integrität der Aktualisierungsdaten seitens des Lesegeräts geprüft, bevor die Aktualisierung vorgenommen wird. Beispielsweise sind die Aktualisierungsdaten signiert, um eine solche Prüfung zu ermöglichen. Das Lesegerät hat dann Mittel zur Prüfung der Signatur der Aktualisierungsdaten, wobei eine Aktualisierung der in dem Programmspeicher gespeicherten Programminstruktionen mit Hilfe der Aktualisierungsdaten nur dann erfolgt, wenn deren Signatur valide ist. Dies hat den Vorteil, dass nur solche Aktualisierungsdaten von dem Lesegerät akzeptiert werden, welche von einer vertrauenswürdigen Quelle stammen, um so das Lesegerät gegen Manipulationen zu schützen.

Nach einer Ausführungsform der Erfindung beinhalten die Mittel zur Prüfung der Signatur einen Prozessor, der durch Instruktionen aus einem Programmspeicher gesteuert wird, um die Validität einer Signatur zu prüfen.

Nach einer Ausführungsform der Erfindung hat das Lesegerät einen Speicherbereich zur Speicherung eines sogenannten Root-Zertifikats einer Public Key Infrastructure (PKI). Das Root-Zertifikat wird von dem Lesegerät zur Prüfung der Signatur der Aktualisierungsdaten verwendet. Nach einer Ausführungsform der Erfindung sind die Mittel zur Prüfung der Signatur so ausgebildet, dass der Prozessor durch Ausführung der Instruktionen auf den Speicherbereich zugreifen kann, um das Root-Zertifikat zu lesen und um damit die Validität der Signatur zu prüfen.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie z.B. einer Person, einer Organisation oder einem Computersystem, zuzuordnen. Beispielsweise kann das Zertifikat dem Standard X.509 oder einem anderen Standard entsprechen. Bei einem "Root-Zertifikat" handelt es sich um ein Zertifikat, welches einer Wurzelzertifizierungsinstanz (Root-CA) des asymmetrischen Kryptosystems zugeordnet ist.

Nach einer Ausführungsform der Erfindung werden die signierten Aktualisierungsdaten mit einem Zertifikat durch Aktualisierungsmittel des Lesegeräts empfangen, wobei das Zertifikat eine Rechtedefinition beinhaltet. Vor der Aktualisierung der in dem Programmspeicher gespeicherten Programminstruktionen durch die Aktualisierungsmittel mit Hilfe der Aktualisierungsdaten wird durch das Lesegerät geprüft, ob das Zertifikat eine für diesen Vorgang ausreichende Rechtedefinition beinhaltet. Die Aktualisierung der Programminstruktionen erfolgt nur dann, wenn das Zertifikat die hierzu erforderlichen Rechte definiert. Hierdurch ist ein weiterer Schutz gegen unerlaubte Manipulationen des Lesegeräts gegeben. Unter einer "Rechtedefinition" wird hier ein Teil der strukturierten Daten des Zertifikats verstanden, durch welchen festgelegt wird, ob diejenige Instanz, welche die Aktualisierungsdaten signiert hat, für die Vornahme einer Aktualisierung der Programminstruktionen berechtigt ist.

Nach einer weiteren Ausführungsform der Erfindung hat das Lesegerät mehrere Sensoren zur Erfassung unterschiedlicher biometrischer Merkmale von einem Benutzer. Beispielsweise hat das Lesegerät einen ersten Sensor zur Erfassung eines Fingerabdrucks und einen zweiten Sensor zur Erfassung eines Irisscans von einem Benutzer. Ferner hat das Lesegerät Abfragemittel zur Feststellung eines Typs der Chipkarte, wobei verschiedenen Chipkartentypen verschiedene biometrische Merkmale bzw. Sensoren zugeordnet sein können. Beispielsweise ist für einen ersten Chipkartentyp definiert, dass eine Erfassung des biometrischen Merkmals, d.h. hier des Fingerabdrucks, mit Hilfe des ersten Sensors des Lesegeräts erfolgt, wohingegen für einen zweiten Chipkartentyp definiert ist, dass die Erfassung des biometrischen Merkmals, d.h. hier des Irisscans, mit Hilfe des zweiten Sensors des Lesegeräts erfolgt. Dies hat den besonderen Vorteil, dass das Lesegerät für unterschiedliche Typen von Chipkarten eingesetzt werden kann.

Nach einer Ausführungsform der Erfindung beinhalten die Abfragemittel einen Prozessor, der durch Instruktionen aus einem Programmspeicher gesteuert wird, um einen Typ der Chipkarte festzustellen.

Die Erfassungsmittel können so ausgebildet sein, dass sie neben dem ersten und zweiten Sensor eine Zuordnungsfunktion beinhalten, die den verschiedenen Chipkartentypen jeweils den ersten oder den zweiten Sensor zuordnen. Die Zuordnungsfunktion kann durch eine Zuordnungstabelle realisiert sein, die in einem Speicher des Lesegeräts gespeichert ist und auf die ein Prozessor des Lesegeräts zugreifen kann, der durch Instruktionen aus einem Programmspeicher gesteuert wird, und der mit Hilfe der Zuordnungsfunktion für einen gegebenen Chipkartentyp den diesem Chipkartentyp zugeordneten Sensor ermittelt und diesen ermittelten Sensor dann für die Erfassung des biometrischen Merkmals ansteuert.

Nach einer Ausführungsform der Erfindung ist den verschiedenen Sensoren des Lesegeräts für die Erfassung der verschiedenen biometrischen Merkmale jeweils eine One-Way-Funktion zugeordnet. Beispielsweise ist also eine erste One-Way-Funktion dem ersten Sensor zugeordnet, um aus den durch den ersten Sensor erfassten biometrischen Fingerabdruckdaten eine Kennung für eine Chipkarte des ersten Typs zu generieren, wohingegen eine zweite One-Way-Funktion dem zweiten Sensor zugeordnet ist, um aus den von dem zweiten Sensor erfassten biometrischen Irisscandaten eine Kennung für eine Chipkarte des zweiten Typs zu generieren.

Nach einer Ausführungsform der Erfindung hat das Lesegerät eine Tastatur zur Eingabe einer weiteren Kennung. Die Kennung für die Chipkarte wird dann aus der weiteren Kennung und den biometrischen Daten abgeleitet, beispielsweise indem die biometrischen Daten und die über die Tastatur eingegebene weitere Kennung durch eine logische Operation, wie z.B. XOR, miteinander verknüpft werden, und auf das Ergebnis dieser Verknüpfung die vordefinierte One-Way-Funktion angewendet wird. Alternativ kann auch die One-Way-Funktion nur auf die biometrischen Daten angewendet werden, wobei das Ergebnis der Anwendung der One-Way-Funktion auf die biometrischen Daten mit der weiteren Kennung verknüpft wird, um so die Kennung für die Chipkarte zu erhalten.

Nach einer weiteren Ausführungsform der Erfindung hat das Lesegerät eine Tastatur zur Eingabe einer PUK. Dies hat den Vorteil, dass die Chipkarte durch Eingabe der PUK entsperrt werden kann, wenn sie nach einer vordefinierten maximalen Anzahl von fehlgeschlagenen Eingabeversuchen der Kennung gesperrt ist.

Ausführungsformen der Erfindung sind besonders vorteilhaft, da die Erfindung den Einsatz von biometrischen Verfahren für die Authentisierung eines Benutzers zum Freischalten einer Chipkartenfunktion ermöglicht, und zwar mit Bezug auf im Stand der Technik übliche Chipkarten ohne biometrische Authentifizierungsmittel, die die Eingabe einer Kennung, insbesondere einer PIN, erfordern. Dabei ist von besonderem Vorteil, dass in dem Lesegerät keinerlei benutzerspezifische Daten gespeichert werden müssen, insbesondere auch keine biometrischen Referenzdaten des Benutzers. Eine kurzfristige Speicherung der biometrischen Daten ist nur für den Zweck der Ableitung der Kennung erforderlich; nachdem die Kennung abgeleitet worden ist, werden die erfassten biometrischen Daten in dem Arbeitsspeicher des Lesegeräts gelöscht.

In einem weiteren Aspekt betrifft die Erfindung ein Lesegerät zur Freischaltung einer Chipkartenfunktion mit Mitteln zur Erfassung von Authentisierungsdaten von einem Benutzer, Mitteln zur kryptografischen Authentisierung des Lesegeräts gegenüber der Chipkarte, Freischaltungsmitteln zur Freischaltung einer Chipkartenfunktion der Chipkarte mit Hilfe der Authentisierungsdaten, wobei eine Freischaltung der Chipkartenfunktion die erfolgreiche kryptografische Authentisierung des Lesegeräts gegenüber der Chipkarte voraussetzt, Kommunikationsmitteln zur Ermöglichung einer Kommunikation zwischen einem Computer und der Chipkarte zur Nutzung der Chipkartenfunktion durch den Computer und einem Speicher zur Speicherung einer Information. Das Lesegerät ist ferner dazu ausgebildet ist, diese gespeicherte Information an die Chipkarte zu übertragen. Damit ist gegenüber der Chipkarte die Erfassung der Authentisierungsdaten durch das Lesegerät spezifizierbar. Die Freischaltung der Chipkartenfunktion durch die Chipkarte setzt voraus, dass die Information einer Anforderung der Chipkarte entspricht. Die Information ist in einem Zertifikat beinhaltet, das aus verschiedenen in dem Speicher gespeicherten Zertifikaten auswählbar ist. Die gespeicherten Zertifikate sind eine Zuordnungstabelle jeweils einem Chipkartentyp zugeordnet und unterscheiden sich durch die darin beinhaltete Information hinsichtlich der Art und Weise der Erfassung der Authentisierungsdaten.

Nach Ausführungsformen der Erfindung beinhaltet das Lesegerät einen einzigen Prozessor, der zur Ausführung verschiedener Instruktionen dient, um verschiedene Funktionalitäten, beispielsweise also die Ableitungsmittel, die Freischaltungsmittel, die Kommunikationsmittel, die Prüfungsmittel, die Überführungsmittel, die Mittel zur Prüfung der Signatur und/oder die Abfragemittel zu realisieren. Das Lesegerät kann aber auch mehrere Prozessoren beinhalten, um solche Funktionalitäten zu realisieren. Das Lesegerät kann auch in einem Netzwerk betrieben werden, wobei ein Teil der Funktionalitäten über das Netzwerk zur Verfügung gestellt wird.

In einem weiteren Aspekt betrifft die Erfindung ein Computerprogrammprodukt, insbesondere ein digitales Speichermedium, mit von einem Computer und/oder einem Lesegerät ausführbaren Instruktionen zur Durchführung eines erfindungsgemäßen Verfahrens.

Im Folgenden werden Ausführungsformen der Erfindung mit Bezugnahme auf die Zeichnungen näher erläutert. Es zeigen:
- Figur 1: ein Blockdiagramm einer ersten Ausführungsform eines Lesegeräts und eines Computersystems,
- Figur 2: ein Flussdiagramm einer Ausführungsform eines Verfahrens,
- Figur 3: ein Blockdiagramm einer weiteren Ausführungsform eines Lesegeräts und eines Computersystems,
- Figur 4: ein Blockdiagramm einer weiteren Ausführungsform eines Lesegeräts und eines Computersystems.

Elemente der nachfolgenden Ausführungsformen, die einander entsprechen, sind jeweils mit denselben Bezugszeichen gekennzeichnet.

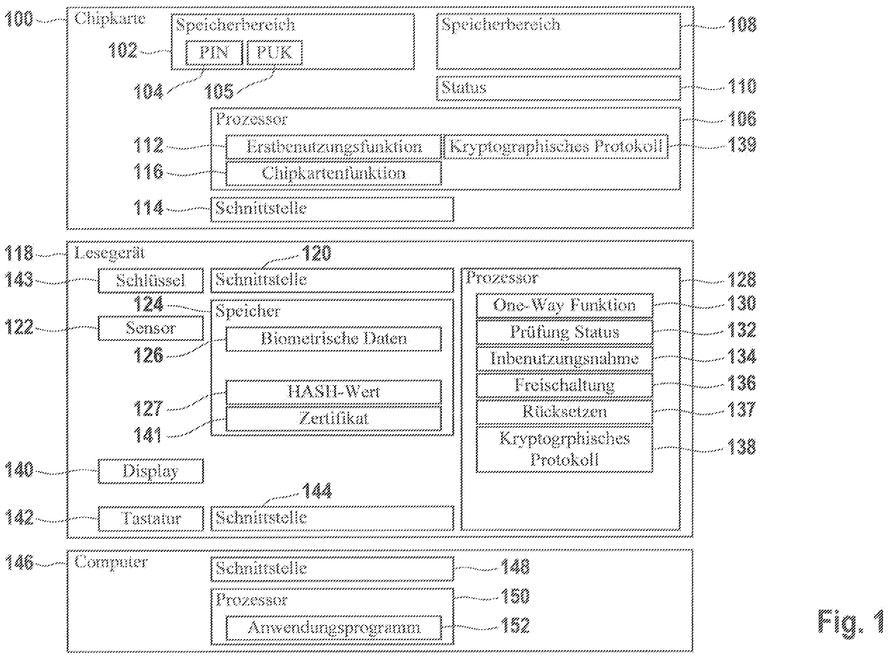

Die Figur 1 zeigt eine Chipkarte 100. Die Chipkarte 100 hat einen geschützten Speicherbereich 102 zur Speicherung einer Kennung 104, wobei es sich bei der Kennung 104 um eine sogenannte PIN handeln kann. Auf den geschützten Speicherbereich 102 kann nur ein Prozessor 106 der Chipkarte 100 zugreifen; ein externer Zugriff auf den geschützten Speicherbereich 102 ist hingegen konstruktiv ausgeschlossen. Biometrische Daten des Benutzers müssen in dem Speicherbereich 102 nicht gespeichert sein.

Die Chipkarte 100 hat ferner einen Speicherbereich 108 zur Speicherung weiterer Daten, wie zum Beispiel zur Speicherung von Benutzerdaten, d.h. sogenannter User Data, die von extern (evtl. nach Freischaltung) über die Schnittstelle 114 ausgelesen werden können, sowie ein Register 110, in dem ein Status der Chipkarte 100 gespeichert ist. Der Inhalt des Registers 110 kann beispielsweise "0" sein, was bedeutet, dass sich die Chipkarte 100 in ihrem Erstbenutzungsstatus befindet oder der Wert des Registers 110 kann "1" sein, was bedeutet, dass sich die Chipkarte 100 in deren Benutzt-Status befindet.

Bei Auslieferung der Chipkarte 100 ist der Inhalt des Registers 110 also "0". Bei einer Inbetriebnahme der Chipkarte 100 kann durch Überprüfung des Inhalts des Registers 110 festgestellt werden, ob sich diese noch in deren Erstbenutzungsstatus befindet, um damit auszuschließen, dass nicht zwischenzeitlich eine unbefugte Benutzung der Chipkarte 100 erfolgt ist.

Der Prozessor 106 der Chipkarte 100 dient zur Ausführung von Programminstruktionen 112, durch die eine Erstbenutzerfunktion implementiert wird. Durch die Erstbenutzerfunktion wird der in dem Register 110 gespeicherte Status der Chipkarte über eine Schnittstelle 114 kommuniziert und es erfolgt aufgrund der Erstbenutzerfunktion ein Übergang des Status von dem Erstbenutzungsstatus in den Benutzt-Status, wobei die Voraussetzungen dieses Übergangs durch das zur Anwendung kommende Verfahren zur Benutzerverifikation (z.B. PIN) definiert sind. Beispielsweise kann die Erstbenutzerfunktion nach dem 0-PIN, Transport-PIN oder nach dem Leer-PIN-Verfahren ausgebildet sein. Insbesondere kann die Erstbenutzerfunktion Teil eines Chipkartenbetriebssystems der Chipkarte 100 sein.

Der Prozessor 106 dient ferner zur Ausführung von Programminstruktionen 116, durch die eine Chipkartenfunktion implementiert wird. Der Chipkartenfunktion ist die Kennung 104, die in dem geschützten Speicherbereich 102 gespeichert ist, zugeordnet. Ferner ist in dem geschützten Speicherbereich 102 eine PUK 105 gespeichert. Zur Nutzung der Chipkartenfunktion ist es erforderlich, dass diese freigeschaltet wird. Dies setzt voraus, dass über die Schnittstelle 114 eine Kennung in die Chipkarte 100 eingegeben wird, welche mit der Kennung 104 identisch ist.

Durch mehrfache Eingabe einer nicht zutreffenden Kennung über die Schnittstelle 114 kann die Chipkarte 100 in einen Sperrzustand übergehen; diesen Sperrzustand kann die Chipkarte 100 - je nach Ausführungsform - durch Eingabe einer sogenannten PUK 105 wieder verlassen, wobei dann die Kennung 104 durch eine neue Kennung ersetzt wird oder die Kennung 104 wieder für die Nutzung freigeschaltet wird (z.B. mittels der PUK 105).

Das Lesegerät 118 für die Chipkarte 100 hat eine Schnittstelle 120 zur Kommunikation mit der Chipkarte 100 über deren Schnittstelle 114. Das Lesegerät 118 hat ferner zumindest einen Sensor 122 zur Erfassung von biometrischen Daten von einem Benutzer der Chipkarte 100. Beispielsweise kann der Sensor 122 als Fingerabdrucksensor ausgebildet sein. Das Lesegerät 118 hat ferner einen elektronischen Speicher 124 zur temporären Speicherung der mit Hilfe des Sensors 122 erfassten biometrischen Daten 126. Bei dem Speicher 124 kann es sich um einen flüchtigen Speicher handeln, wie zum Beispiel einen Arbeitsspeicher des Lesegeräts 118.

Das Lesegerät hat ferner einen Prozessor 128 zur Ausführung von Programminstruktionen 130, 132, 134, 136, 137 und 138.

Die Programminstruktionen 130 implementieren eine One-Way-Funktion, insbesondere eine biometrische HASH-Funktion zur Generierung eines HASH-Wertes aus den biometrischen Daten 126. Durch Ausführung der Programminstruktionen 136 wird der durch Ausführung der Programminstruktionen 130 generierte HASH-Wert als Kennung von der Schnittstelle 120 zu der Schnittstelle 114 der Chipkarte 100 übertragen, um die Chipkartenfunktion 116 freizuschalten.

Durch Ausführung der Programminstruktionen 132 kann durch das Lesegerät 118 geprüft werden, in welchem Status sich die Chipkarte 100 befindet. Beispielsweise wird durch Ausführung der Programminstruktionen 132 ein Kommando generiert und an die Chipkarte 100 gesendet, um von der Chipkarte den Inhalt des Registers 110 abzufragen.

Durch Ausführung der Programminstruktionen 134 können die für eine Inbenutzungnahme der Chipkarte 100 erforderlichen Schritte durchgeführt werden. Hierzu werden die biometrischen Daten 126 erstmalig von dem Benutzer über den Sensor 122 erfasst. Auf die biometrischen Daten 126 wird die One-Way-Funktion durch Ausführung der Programminstruktionen 130 angewendet, um den HASH-Wert 127 zu erhalten, der in dem Speicher 124 gespeichert wird. Dieser HASH-Wert 127 ist als die Kennung 104 definiert und von dem Lesegerät 118 an die Chipkarte 100 übertragen, sodass die Erstbenutzerfunktion der Chipkarte 100 die Kennung 104 in dem geschützten Speicherbereich 102 speichert. Der HASH-Wert 127 wird nur temporär in dem Speicher 124 gespeichert und nach seiner Übertragung als Kennung 104 an die Chipkarte aus dem Speicher 124 gelöscht.

Die Programminstruktionen 137 implementieren eine Funktion zum Zurücksetzen des Fehlbedienungszählers der Chipkarte 100 z.B. mittels der PUK 105.

Der Prozessor 128 dient ferner zur Ausführung von Programminstruktionen 138. Der Prozessor 106 der Chipkarte 100 dient zur Ausführung entsprechender Programminstruktionen 139. Durch die Programminstruktionen 138 und 139 wird ein kryptografisches Protokoll implementiert, wobei durch Ausführung der Programminstruktionen 138 die das Lesegerät 118 betreffenden Schritte dieses kryptografischen Protokolls ausgeführt werden und wobei durch Ausführung der Programminstruktionen 139 die die Chipkarte 100 betreffenden Schritte dieses kryptografischen Protokolls ausgeführt werden. Das kryptografische Protokoll ist so ausgebildet, dass zumindest eine Authentisierung des Lesegeräts 118 gegenüber der Chipkarte 100 erfolgen kann. Das kryptografische Protokoll kann auch für eine gegenseitige Authentisierung des Lesegeräts und der Chipkarte ausgebildet sein.

In dem Speicher 124 kann zur Authentisierung des Lesegeräts 118 mit Hilfe des kryptografischen Protokolls ein Zertifikat 141 des Lesegeräts 118 gespeichert sein. Bei dem Zertifikat 141 kann es sich um ein Zertifikat einer Public Key Infrastructure (PKI) handeln. Beispielsweise kann es sich um ein Zertifikat im X.509-Format handeln oder um ein sogenanntes Card Verifiable Certificate (CVC). Das Zertifikat 141 beinhaltet zumindest einen öffentlichen Schlüssel des Lesegeräts, der zu einem in einem geschützten Speicher 143 des Lesegeräts 118 gespeicherten privaten Schlüssel gehört. Durch den in dem Speicher 143 des Lesegeräts 118 gespeicherten privaten Schlüssel und den öffentlichen Schlüssel des Zertifikats 141 wird ein asymmetrisches kryptografisches Schlüsselpaar gebildet, welches die Identität des Lesegeräts 118 bestimmt. Bei dem Speicher 143 kann es sich beispielsweise um ein so genanntes Hardware-Sicherheitsmodul (HSM), d.h. ein so genanntes Security Module, handeln.

Das Lesegerät 118 kann ferner ein Display 140 aufweisen. Über das Display 140 kann eine Benutzerführung erfolgen, um dem Benutzer beispielsweise mitzuteilen, was er für die Erfassung der biometrischen Daten 126 zu tun hat. Ferner kann insbesondere bei der Inbenutzungnahme der Chipkarte 100 über das Display 140 der HASH-Wert 127, d.h. die durch Ausführung der One-Way-Funktion definierte Kennung 104, auf dem Display 140 angezeigt werden, sodass der Benutzer Kenntnis von dieser Kennung 104 erhält. Der Benutzer kann sich dann diese Kennung 104 merken und für die Verwendung an beliebigen Kartelesegeräten als Kennung (PIN) verwenden

Das Lesegerät 118 hat ferner optional eine Tastatur 142. Das Lesegerät 118 kann so ausgebildet sein, dass zur Freischaltung der Chipkarte 100 der Benutzer wahlweise seine biometrischen Daten 126 von dem Sensor 122 erfassen lässt oder die Kennung 104 in die Tastatur 142 eingibt. Diese Wahlmöglichkeit hat den Vorteil, dass auch dann eine Freischaltung der Chipkarte 100 mit Hilfe des Lesegeräts 118 möglich ist, wenn der Benutzer daran gehindert ist, die biometrischen Daten mittels des Sensors 122 erfassen zu lassen. Dies kann beispielsweise dann der Fall sein, wenn eine korrekte Erfassung des biometrischen Merkmals nicht möglich ist, z.B. der Benutzer eine Verletzung an seinem Finger hat.

Das Lesegerät 118 kann auch so ausgebildet sein, dass für die Freischaltung der Chipkarte 100 sowohl die Erfassung der biometrischen Daten 126 als auch die Eingabe einer weiteren Kennung über die Tastatur 142 erforderlich ist. Aus der Kombination der weiteren Kennung und der biometrischen Daten 126 generiert der Prozessor 128 unter Verwendung der One-Way-Funktion dann die Kennung 104.

Das Lesegerät 118 hat eine weitere Schnittstelle 144 zum Anschluss des Lesegeräts 118 an einen Computer 146 oder ein Netzwerk. Der Computer hat eine Schnittstelle 148, die zum Anschluss der Schnittstelle 144 des Lesegeräts 118 dient. Bei der Schnittstelle 148 handelt es sich zum Beispiel um eine standardisierte Computer-Schnittstelle, wie zum Beispiel eine USB-Schnittstelle, LAN, WLAN oder dergleichen.

Der Computer 146 hat zumindest einen Prozessor 150 zur Ausführung eines Anwendungsprogramms 152. Ferner kann der Prozessor 150 auch dazu dienen, ein Chipkarten-Treiberprogramm auszuführen, welches zur Generierung von Chipkarten-Kommandos dient, die der Computer 146 über das Lesegerät 118 an die Chipkarte 100 senden kann. Alternativ wird ein solches Chipkarten-Treiberprogramm von dem Lesegerät 118 ausgeführt.

Im Lieferzustand befindet sich die Chipkarte 100 in ihrem Erstbenutzungsstatus, d.h. Status = 0. Ohne Beschränkung der Allgemeinheit wird im Weiteren davon ausgegangen, dass die Erstbenutzerfunktion 112 ein Leer-PIN-Verfahren implementiert, d.h. es ist initial in dem Erstbenutzungsstatus keine Kennung in dem Speicherbereich 102 gespeichert.

Bei Kopplung der Chipkarte 100 mit dem Lesegerät 118 erwartet die Chipkarte 100 bzw. deren Erstbenutzerfunktion also die initiale Eingabe der Kennung 104. Bei Kopplung der Chipkarte 100 mit dem Lesegerät 118 erfolgt zunächst die Ausführung des kryptografischen Protokolls durch die Programminstruktionen 137 und 139, um zumindest das Lesegerät 118 gegenüber der Chipkarte 100 kryptografisch zu authentisieren. Wenn die Authentisierung erfolgreich war, werden seitens des Lesegeräts 118 zunächst die Programminstruktionen 132 ausgeführt, um den Status der Chipkarte 100 zu prüfen.

Da sich die Chipkarte zunächst in ihrem Erstbenutzungsstatus befindet, wird danach die Ausführung der Programminstruktionen 134 gestartet, um die Chipkarte 100 in Benutzung zu nehmen. Hierzu wird über das Display 140 eine Aufforderung an den Benutzer ausgegeben, damit dessen biometrische Daten von dem Sensor 122 erfasst werden können. Beispielsweise wird der Benutzer dazu aufgefordert, einen Finger auf den Sensor 122 zu legen, damit Fingerabdruckdaten als biometrische Daten 126 erfasst werden können. Durch Ausführung der Programminstruktionen 130 wird aus den biometrischen Daten 126 dann durch Ausführung der Programminstruktionen 130 der Hashwert 127 als die Kennung 104 gewonnen, welche von dem Lesegerät 118 an die Chipkarte 100 übertragen wird, und dort durch Ausführung der Programminstruktionen 112 in den Speicherbereich 102 gespeichert wird. Der in dem Register 110 gespeicherte Status wird dann auf den Benutzt-Status = 1 gesetzt.

Vorzugsweise wird die Kennung 104 auf dem Display 140 angezeigt, sodass der Benutzer Kenntnis von der Kennung 104 erhält. Beispielsweise erscheint die Kennung 104 während eines vorgegebenen Zeitraums von zum Beispiel einigen Sekunden oder einer Minute auf dem Display 140 oder so lange, bis ein Benutzer die Anzeige durch Betätigung eines Bedienelements des Lesegeräts 118 löscht.

Die Kennung 104 wird während der Anzeige auf dem Display 140 zum Beispiel in dem Speicher 124 des Lesegeräts 118 temporär gespeichert. Nach der Beendigung der Anzeige der Kennung 104 auf dem Display 140 wird die Kennung 104 aus dem Speicher 124 gelöscht. Ferner werden auch die biometrischen Daten 126 aus dem Speicher 124 gelöscht, nachdem die Kennung 104 durch Ausführung der Programminstruktionen 130 erzeugt worden ist. Dies hat den Vorteil, dass in dem Lesegerät 118 keinerlei personenbezogenen Daten des Benutzers und auch keinerlei Daten betreffend dessen Chipkarte 100 gespeichert werden. Auch der Hashwert 127, d.h. die Kennung 104 wird in dem Lesegerät 118 gelöscht, nachdem diese zu der Chipkarte 100 übertragen worden ist. Für jeden Eingabeversuch der Kennung 104 werden also die biometrischen Daten 126 erneut erfasst.

Die Steuerung der Abläufe zur Freischaltung der Karte bei der Erstbenutzung bzw. der Entsperrung der Kennung 104 durch die PUK 105 kann alternativ auch durch den Computer 146 erfolgen, so dass das Lesergerät 118 die vom Computer 146 vorgegeben Schritte entsprechend durchführt.

Nachdem die Chipkarte 100 in deren Benutzt-Status überführt worden ist, kann zur Nutzung von deren Chipkartenfunktion wie folgt vorgegangen werden:
Nachdem die Chipkarte 100 mit dem Lesegerät 118 über die Schnittstellen 114 und 120 gekoppelt worden ist, wird erfolgt zunächst wiederum die Ausführung des kryptografischen Protokolls durch die Programminstruktionen 137 und 139, um zumindest das Lesegerät 118 gegenüber der Chipkarte 100 kryptografisch zu authentisieren.

Wenn die Authentisierung erfolgreich war, wird durch Ausführung der Programminstruktionen 132 wiederum zunächst der Status der Chipkarte 100 festgestellt. Da dieser Status jetzt der Benutzt-Status ist, wird die Ausführung der Programminstruktionen 136 gestartet. Der Benutzer wird über das Display 140 zur Erfassung der biometrischen Daten zum Beispiel durch Auflegen eines Fingers auf den Sensor 122 zur Erfassung der Fingerabdruckdaten als biometrische Daten 126 aufgefordert. Nach Erfassung der biometrischen Daten 126 wird die Ausführung der Programminstruktionen 130 gestartet, um daraus die Kennung 104 zu gewinnen. Die Kennung 104 wird dann von dem Lesegerät 118 an die Chipkarte 100 übertragen, sodass die Chipkarte 100 die von dem Lesegerät 118 empfangene Kennung mit der in dem Speicherbereich 102 gespeicherten Kennung 104 vergleichen kann. Bei Übereinstimmung der beiden Kennungen wird die Chipkartenfunktion freigeschaltet. Die biometrischen Daten 126 werden aus dem Speicher 124 gelöscht, nachdem die Kennung 104 durch Ausführung der Programminstruktionen 130 erzeugt worden ist.

Das Lesegerät 118 kann so ausgebildet sein, dass der Benutzer als Alternative zur Eingabe der Kennung durch Erfassung der biometrischen Daten die Kennung 127 auch über die Tastatur 142 eingeben kann.

Nach Freischaltung der Chipkartenfunktion kann das Anwendungsprogramm 152 des Computers 146 diese Chipkartenfunktion verwenden, indem es über das Lesegerät 118 auf die Chipkarte 100 zugreift.

Die Schnittstelle 114 der Chipkarte 100 und die Schnittstelle 120 des Lesegeräts 118 können als kontaktbehaftete, kontaktlose oder als sogenannte Dual Mode Interface ausgebildet sein. Das Lesegerät 118 kann auch über mehrere gleiche oder verschiedene Schnittstellen 120 verfügen.

Ferner kann die Schnittstelle 144 des Lesegeräts 118 auch als LAN oder WLAN Schnittstelle ausgebildet sein. Das Lesegerät 118 kann auch mehrere gleiche oder verschiedene Schnittstellen 114 zu externen Host-Computern aufweisen.

Die Authentisierung des Lesegeräts 118 gegenüber der Chipkarte 100 mit Hilfe des kryptografischen Protokolls kann beispielsweise durch ein Challenge-Response-Verfahren wie folgt durchgeführt werden:
Zunächst sendet das Lesegerät 118 sein Zertifikat 141 mit seinem öffentlichen Schlüssel an die Chipkarte 100. Durch Ausführung der Programminstruktionen 139 wird dann eine so genannte Challenge durch die Chipkarte 100 generiert. Bei dieser Challenge kann es sich um eine Zufallszahl handeln. Die Zufallszahl wird durch Ausführung der Programminstruktionen 139 mit dem öffentlichen Schlüssel, der in dem Zertifikat 141 beinhaltet ist, verschlüsselt und das daraus resultierende Chiffrat wird dann von der Chipkarte 100 an das Lesegerät 118 übertragen. Durch Ausführung der Programminstruktionen 138 wird seitens des Lesegeräts 118 eine Entschlüsselung dieses Zertifikats mit Hilfe des in dem Speicher 143 gespeicherten privaten Schlüssels des Lesegeräts 118 vorgenommen. Das Resultat dieser Entschlüsselung sendet das Lesegerät 118 an die Chipkarte 100. Die Chipkarte 100 vergleicht dann, ob das von dem Lesegerät 118 empfangene Resultat der Entschlüsselung des Chiffrats mit der ursprünglich generierten Zufallszahl übereinstimmt. Ist dies der Fall, so gilt das Lesegerät 118 gegenüber der Chipkarte 100 als authentisiert.

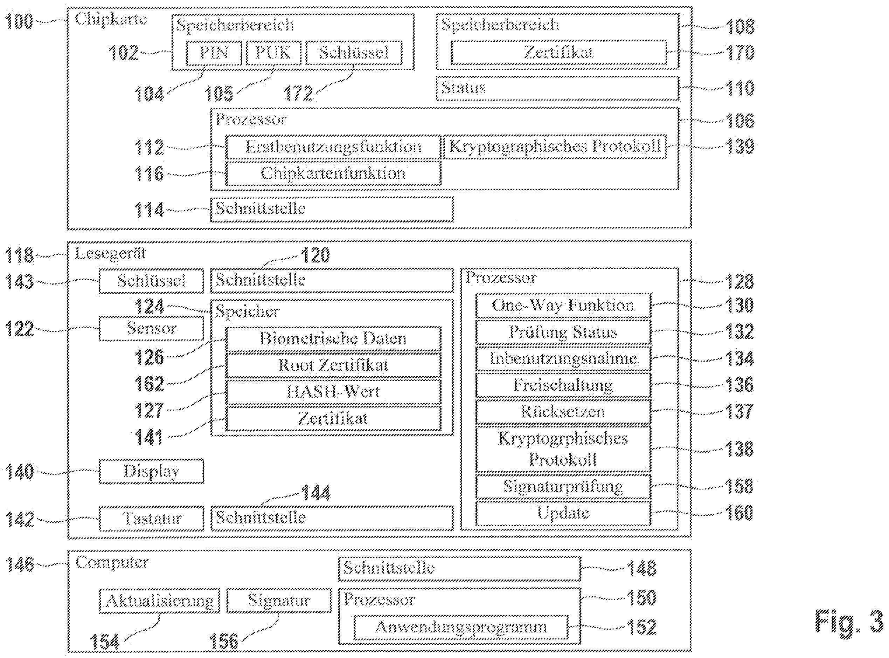

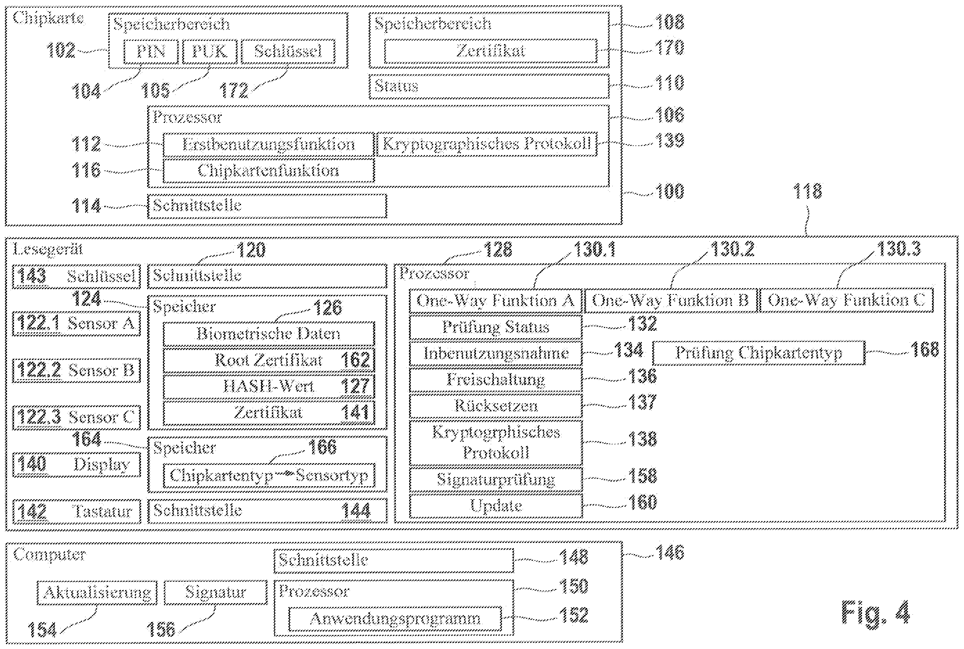

In analoger Art und Weise kann auch eine Authentisierung der Chipkarte 100 gegenüber dem Lesegerät 118 durchgeführt werden, wobei hierzu ein privater Schlüssel in dem Speicherbereich 102 der Chipkarte 100 gespeichert ist (vgl. hierzu die Ausführungsformen der Figuren 3 und 4).

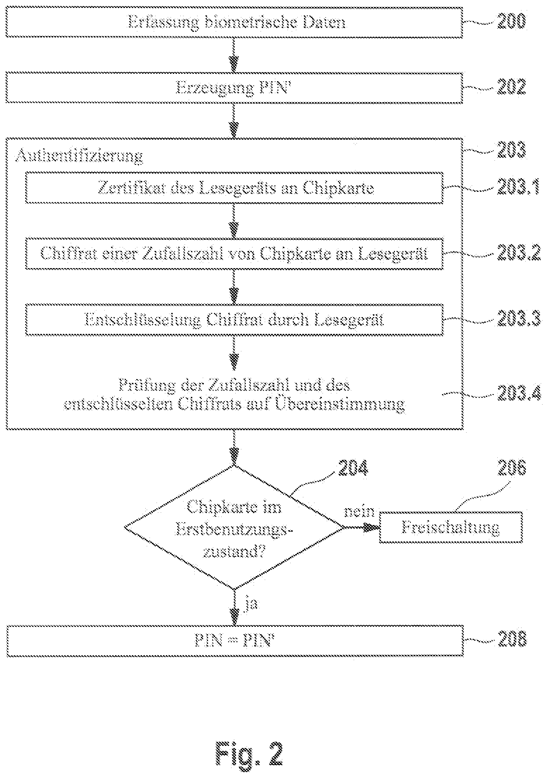

Die Figur 2 zeigt eine Ausführungsform eines Verfahrens. In dem Schritt 200 werden biometrische Daten von einem Benutzer der Chipkarte durch das Lesegerät erfasst. Aus diesen biometrischen Daten wird in dem Schritt 202 von dem Lesegerät eine Kennung erzeugt, und zwar vorzugsweise durch Ausführung einer sogenannten biometrischen HASH-Funktion. Diese Kennung wird im Weiteren als PIN' bezeichnet. Alternativ kann die PIN' auch über eine Tastatur des Lesegeräts eingegeben werden.

In dem Schritt 203 erfolgt eine kryptografische Authentifizierung zumindest des Lesegeräts gegenüber der Chipkarte. Diese kryptografische Authentifizierung kann beispielsweise wie folgt durchgeführt werden:
In dem Schritt 203.1 sendet das Lesegerät sein Zertifikat an die Chipkarte, sodass die Chipkarte in den Besitz des öffentlichen Schlüssels des Lesegeräts kommt. Die Chipkarte kann die Validität des Zertifikats prüfen, insbesondere dann, wenn es sich um ein CVC handelt. In dem Schritt 203.2 generiert die Chipkarte eine Challenge, d.h. beispielsweise eine Zufallszahl, welche mit dem öffentlichen Schlüssel des Lesegeräts verschlüsselt wird. Das aus dieser Verschlüsselung resultierende Chiffrat wird von der Chipkarte an das Lesegerät übertragen. In dem Schritt 203.3 entschlüsselt das Lesegerät das von der Chipkarte empfangene Chiffrat mit Hilfe seines privaten Schlüssels. Das Ergebnis dieser Entschlüsselung wird in dem Schritt 203.4 von dem Lesegerät an die Chipkarte übertragen, sodass die Chipkarte dann das Ergebnis der Entschlüsselung mit der in dem Schritt 203.2 generierten Zufallszahl auf Übereinstimmung prüfen kann. Liegt eine solche Übereinstimmung vor, so ist das Lesegerät erfolgreich gegenüber der Chipkarte authentifiziert worden und die Ablaufsteuerung geht zu dem Schritt 204 über.

In dem Schritt 204 wird dann von dem Lesegerät geprüft, ob sich die Chipkarte in ihrem Erstbenutzungszustand befindet. Ist dies nicht der Fall, d.h. befindet sich die Chipkarte in ihrem Benutzt-Zustand, so wird in dem Schritt 206 die PIN' von dem Lesegerät zu der Chipkarte übertragen, sodass eine Chipkartenfunktion der Chipkarte freigeschaltet wird, wenn die PIN' mit der in der Chipkarte gespeicherten Kennung, d.h. der PIN, übereinstimmt.

Befindet sich die Chipkarte hingegen in ihrem Erstbenutzungszustand, so werden von dem Lesegerät die erforderlichen Eingaben in die Chipkarte getätigt, sodass die PIN' als die PIN der Chipkarte definiert wird. Beispielsweise ersetzt das Lesegerät eine initial im Erstbenutzungszustand der Chipkarte gespeicherte PIN durch die PIN'. Dies erfolgt insbesondere dann, wenn die Chipkarte 100 ein 0-PIN-Verfahren implementiert. Wenn die Chipkarte 100 ein Leer-PIN-Verfahren implementiert, so wird die PIN' als die initiale PIN der Chipkarte von dem Lesegerät gesetzt.

Von wesentlichem Vorteil ist, dass nach der Erzeugung der PIN' in dem Schritt 202 die biometrischen Daten in dem Lesegerät gelöscht werden können und dass die PIN' nach der Übertragung zu der Chipkarte in dem Schritt 206 bzw. in dem Schritt 208 ebenfalls in dem Lesegerät gelöscht werden kann, sodass also keine sensitiven Daten permanent in dem Lesegerät gespeichert werden müssen.

Die Figur 3 zeigt eine Ausführungsform des Lesegeräts 118, bei der das kryptografische Protokoll so ausgebildet ist, dass eine gegenseitige Authentisierung des Lesegeräts 118 und der Chipkarte 100 durchgeführt wird.

Hierzu ist beispielsweise in dem Speicherbereich 108 der Chipkarte 100 ein Zertifikat 170 der Chipkarte 100 gespeichert. Dieses Zertifikat 170 beinhaltet einen öffentlichen Schlüssel, der einem privaten Schlüssel 172 zugeordnet ist, welcher in dem Speicherbereich 102 der Chipkarte 100 gespeichert ist. Durch das Zertifikat 170 wird also die Chipkarte 100 eindeutig identifiziert.

Zur Authentisierung der Chipkarte 100 gegenüber dem Lesegerät 118 kann das kryptografische Protokoll so ausgebildet sein, dass die Chipkarte 100 ihr Zertifikat 170 an das Lesegerät 118 überträgt. Durch Ausführung der Programminstruktionen 138 generiert das Lesegerät 118 dann eine Challenge, wie zum Beispiel eine Zufallszahl. Diese Zufallszahl wird mit dem öffentlichen Schlüssel des Zertifikats 170 verschlüsselt und von dem Lesegerät an die Chipkarte 100 gesendet. Durch Ausführung der Programminstruktionen 139 wird das Chiffrat mit Hilfe des privaten Schlüssels 172 der Chipkarte 100 entschlüsselt und das Ergebnis der Entschlüsselung von der Chipkarte 100 an das Lesegerät 118 gesendet. Durch Ausführung der Programminstruktionen 138 wird dann seitens des Lesegeräts 118 geprüft, ob das von der Chipkarte 100 empfangene Ergebnis der Entschlüsselung mit der ursprünglich generierten Zufallszahl übereinstimmt. Wenn eine solche Übereinstimmung vorliegt, gilt die Chipkarte 100 als gegenüber dem Lesegerät 118 authentifiziert.

Bei der in der Figur 3 gezeigten Ausführungsform des Lesegeräts 118 sind die Programminstruktionen 130 aktualisierbar, um beispielsweise eine gegebene One-Way-Funktion durch eine verbesserte Version zu ersetzen oder um die One-Way-Funktion durch eine andere One-Way-Funktion auszutauschen. Zur Aktualisierung der Programminstruktionen 130 können beispielsweise von dem Computer 146 über die Schnittstelle 144 Aktualisierungsdaten 154 empfangen werden. Die Aktualisierungsdaten können Programminstruktionen beinhalten, durch welche die Programminstruktionen 130 ergänzt oder ersetzt werden. Vorzugsweise sind die Aktualisierungsdaten 154 von einer vertrauenswürdigen Quelle signiert, weisen also eine Signatur 156 auf. Zu der Signatur gehört auch ein Zertifikat einer PKI der vertrauenswürdigen Quelle.

Zur Durchführung einer Aktualisierung dient der Prozessor 128 zur Ausführung von Programminstruktionen 158 und zur Ausführung von Programminstruktionen 160. Ferner ist in dem Speicher 124 ein sogenanntes Root-Zertifikat 162 der PKI gespeichert.

Die Programminstruktionen 158 dienen zur Prüfung der Validität der Signatur 156 und die Programminstruktionen 160 dienen zur Aktualisierung der Programminstruktionen 130 mit Hilfe der Aktualisierungsdaten 154.

Zur Aktualisierung der Programminstruktionen 130 wird beispielsweise wie folgt vorgegangen:
Zunächst werden die signierten Aktualisierungsdaten 154 auf den Computer 146 geladen. Dies kann zum Beispiel durch Herunterladen der Aktualisierungsdaten 154 von einem Netzwerk erfolgen. Die signierten Aktualisierungsdaten 154 werden dann von dem Computer 146 über die Schnittstellen 148 und 144 zu dem Lesegerät 118 übertragen. Durch Ausführung der Programminstruktionen 158 wird dann die Validität der Signatur 156 geprüft, wozu das in dem Speicher 124 gespeicherte Root-Zertifikat 162 von den Programminstruktionen 158 verwendet wird. Für den Fall, dass die Signatur 156 valide ist, werden die Programminstruktionen 130 durch Ausführung der Programminstruktionen 160 mit Hilfe der Aktualisierungsdaten 154 aktualisiert.

Die Figur 4 zeigt eine Ausführungsform des Lesegeräts 118, welches für Chipkarten verschiedener Chipkartentypen verwendet werden kann, wie zum Beispiel der Chipkartentypen A, B und C. Beispielsweise unterscheiden sich die Chipkartentypen A, B und C durch unterschiedliche Sicherheitsanforderungen voneinander, sodass die Kennung 104 je nach dem Chipkartentyp unterschiedlich lang sein muss oder von unterschiedlich kombinierten biometrischen Merkmalen und Nutzereingaben abgeleitet werden muss.

Beispielsweise hat das Lesegerät 118 für jeden der unterstützten Chipkartentypen einen separaten Sensor. Der Sensor A 122.1 dient zur Erfassung der biometrischen Daten 126, wenn die Chipkarte 100 den Chipkartentyp A hat, der Sensor B 122.2 dient zur Erfassung der biometrischen Daten 126, wenn die Chipkarte 100 den Chipkartentyp B hat und der Sensor C 122.3 dient zur Erfassung der biometrischen Daten 126, wenn die Chipkarte 100 den Chipkartentyp C hat. Beispielsweise handelt es sich bei dem Sensor A um einen Fingerabdrucksensor, bei dem Sensor um einen Sensor zur Erfassung eines Irisscans und bei dem Sensor C um einen Sensor zur Erfassung einer Gesichtsgeometrie des Benutzers der Chipkarte 100.

Das Lesegerät 118 hat einen nicht-volatilen Speicher 164 zur Speicherung einer Zuordnungstabelle 166, die jedem der unterstützten Chipkartentypen zumindest einen der vorhandenen Sensortypen zuordnet. In dem betrachteten Beispielsfall beinhaltet die Zuordnungstabelle 166 in dem Speicher 164 also die Zuordnungen
Chipkartentyp A → Sensortyp A,
Chipkartentyp B → Sensortyp B,
Chipkartentyp C → Sensortyp C.

Alternativ oder zusätzlich zu der Zuordnung der Chipkartentypen zu den Sensortypen kann die Zuordnungstabelle 166 des Speichers 164 auch eine Zuordnung verschiedener One-Way-Funktionen zu den Chipkartentypen und/oder den Sensortypen aufweisen. Beispielsweise dient der Prozessor 128 hier zur Ausführung der Programminstruktionen 130.1, 130.2 und 130.3 durch die die One-Way-Funktionen A, B bzw. C implementiert werden. Der Chipkartentyp A wird dann durch die Zuordnungstabelle der One-Way-Funktion A zugeordnet und entsprechend werden der Chipkartentyp B der One-Way-Funktion B und der Chipkartentyp C der One-Way-Funktion C zugeordnet.

Der Prozessor 128 dient ferner zur Ausführung von Programminstruktionen 168 zur Prüfung des Chipkartentyps der Chipkarte 100.

Wenn die Chipkarte 100 in den Empfangs- oder Kontaktbereich der Schnittstelle 120 des Lesegeräts 118 gebracht wird, so wird durch Ausführung der Programminstruktionen 168 seitens des Lesegeräts 118 zunächst der Chipkartentyp von der Chipkarte 100 abgefragt. Es wird dann mit dem abgefragten Chipkartentyp auf die Zuordnungstabelle 166 zugegriffen, um festzustellen, welcher der Sensoren A, B oder C und welche der One-Way-Funktionen A, B oder C für den Chipkartentyp der Chipkarte 100 verwendet werden sollen. Wenn beispielsweise die Chipkarte den Typ A hat, so sind dies beispielsweise der Sensor A und die One-Way-Funktion A.

Für die nachfolgende Erfassung der biometrischen Daten (vgl. Schritt 200 in der Ausführungsform der Figur 2) wird dann der Sensor A verwendet und für die Erzeugung der Kennung 104 aus den biometrischen Daten 126 wird die One-Way-Funktion A verwendet.

Die Benutzerführung kann so ausgebildet sein, dass auf dem Display 140 angezeigt wird, was der Benutzer zu tun hat, damit die biometrischen Daten 126 in Abhängigkeit von dem durch die Zuordnungstabelle 166 und den Chipkartentyp 100 determinierten Sensortyp erfasst werden können.

Das Lesegerät 118 kann auch so ausgebildet sein, dass das Zertifikat 141, das in dem Speicher 124 gespeichert ist, eine Information beinhaltet, welche spezifiziert, auf welche Art und Weise die Erfassung der Authentisierungsdaten des Benutzers, d.h. der Kennung, erfolgt. Beispielsweise kann das Lesegerät 118 so ausgebildet sein, dass die Erfassung der Kennung nur durch Eingabe der Kennung über die Tastatur 142 vorgenommen werden kann. In diesem Fall wird durch die Information, die in dem Zertifikat 141 beinhaltet ist, spezifiziert, dass die Erfassung der Kennung durch Eingabe über die Tastatur des Lesegeräts erfolgt.

Das Lesegerät 118 kann auch so ausgebildet sein, dass es zum Beispiel nur den Sensor A 122.1 aufweist, um die Kennung zu erfassen. In diesem Fall spezifiziert die Information in dem Zertifikat 141, dass die Erfassung der Kennung über den Sensor A mit Hilfe der One-Way-Funktion A erfolgt.

Wenn das Lesegerät 118 sein Zertifikat 141 an die Chipkarte 100 sendet, um sich gegenüber der Chipkarte 100 zu authentifizieren (vgl. Schritt 203 der Ausführungsform der Figur 2), so prüft die Chipkarte 100 zusätzlich durch Ausführung der Programminstruktionen 139, ob die in dem Zertifikat 141 beinhaltete Information, eine Anforderung der Chipkarte 100 erfüllt. Diese Anforderung kann in Form der Programminstruktionen 139 vordefiniert sein. Beispielsweise kann seitens der Chipkarte 100 vorgegeben sein, dass die Erfassung der Kennung nur über die Tastatur des Lesegeräts erfolgen darf oder dass die Erfassung der Kennung nur über einen Sensor des Typs A mit Hilfe einer One-Way-Funktion des Typs A erfolgen darf. Nach Empfang des Zertifikats 141 prüft die Chipkarte dann also, ob die in dem Zertifikat 100 beinhaltete Information diese vorgegebene Anforderung erfüllt. Wenn dies nicht der Fall ist, wird das kryptografische Protokoll abgebrochen.

Das Lesegerät 118 kann auch so ausgebildet sein, dass verschiedene Zertifikate 141 in dem Speicher 124 gespeichert sind, wobei sich diese verschiedenen Zertifikate 141 durch die darin beinhaltete Information hinsichtlich der Art und Weise der Erfassung der Authentisierungsdaten unterscheiden. Beispielsweise können die verschiedenen Zertifikate 141 jeweils einem Chipkartentyp zugeordnet sein. Eine solche Zuordnung kann über die Zuordnungstabelle 166 erfolgen. Bei einer solchen Ausführungsform wird nach Feststellung des Chipkartentyps durch Ausführung der Programminstruktionen 168 über die Zuordnungstabelle 166 das diesem Chipkartentyp zugeordnete Zertifikat 141 festgestellt und dann an die Chipkarte 100 gesendet. Die nachfolgende Erfassung der Authentisierungsdaten durch das Lesegerät 118 erfolgt dann so, wie es durch die in dem ausgewählten Zertifikat 141 beinhaltete Information spezifiziert ist.

Nach einer weiteren Ausführungsform kann das Lesegerät 118 so ausgebildet sein, dass die in dem Zertifikat 141 beinhaltete Information den Typ der One-Way-Funktion, die zur Ableitung der Kennung von dem Lesegerät 118 verwendet wird, angibt. Alternativ oder zusätzlich kann die Information auch eine Versionsnummer dieser One-Way-Funktion beinhalten. Wenn die betreffende One-Way-Funktion durch die Aktualisierungsdaten 154 aktualisiert wird, so wird auch das Zertifikat 141 aktualisiert, wobei das aktualisierte Zertifikat 141 die aktuelle Versionsnummer der betreffenden One-Way-Funktion angibt. Die Chipkarte 100 kann beispielsweise die Anforderung haben, dass zur Erfassung der Authentisierungsdaten eine bestimmte One-Way-Funktion zu verwenden ist, und dass zusätzlich diese One-Way-Funktion einen bestimmten Aktualisierungsstand haben muss. Beispielsweise wird dieser Aktualisierungsstand durch eine Versionsnummer angegeben.

Die Prüfung des Zertifikats 141 seitens der Chipkarte 100 beinhaltet dann die Prüfung, ob die in dem Zertifikat 141 beinhaltete Information hinsichtlich der für die Ableitung der Kennung verwendeten One-Way-Funktion und deren Versionsnummer die diesbezüglichen Anforderungen der Chipkarte 100 erfüllt. Wenn dies nicht der Fall ist, wird die Ausführung des kryptografischen Protokolls abgebrochen.

### Bezugszeichenliste

- 100: Chipkarte
- 102: Speicherbereich
- 104: Kennung
- 105: PUK
- 106: Prozessor
- 108: Speicherbereich
- 110: Register
- 112: Programminstruktionen
- 114: Schnittstelle
- 116: Programminstruktionen
- 118: Lesegerät
- 120: Schnittstelle
- 122: Sensor
- 124: Speicher
- 126: biometrische Daten
- 127: Hashwert
- 128: Prozessor
- 130: Programminstruktionen
- 132: Programminstruktionen
- 134: Programminstruktionen
- 136: Programminstruktionen
- 137: Programminstruktionen
- 137: Programminstruktionen
- 139: Programminstruktionen
- 140: Display
- 141: Zertifikat
- 142: Tastatur
- 143: Speicher
- 144: Schnittstelle
- 146: Computer
- 148: Schnittstelle
- 150: Prozessor
- 152: Anwendungsprogramm
- 154: Aktualisierungsdaten
- 156: Signatur
- 158: Programminstruktionen
- 160: Programminstruktionen
- 162: Root-Zertifikat
- 164: Speicher
- 166: Zuordnungstabelle
- 168: Programminstruktionen
- 170: Zertifikat
- 172: privater Schlüssel

## Patentansprüche

1. Verfahren zur Freischaltung einer Chipkartenfunktion (116) einer Chipkarte (100) mit folgenden Schritten:
- Erfassung von Authentisierungsdaten (104; 127) von einem Benutzer mit Hilfe eines Chipkarten-Lesegeräts (118),
- kryptografische Authentisierung des Lesegeräts gegenüber der Chipkarte,
- Übertragung der Authentisierungsdaten des Benutzers von dem Lesegerät an die Chipkarte zur Freischaltung der Chipkartenfunktion, um eine Nutzung der Chipkartenfunktion durch einen an das Lesegerät angeschlossenen Computer (146) zu ermöglichen,
wobei die Freischaltung der Chipkartenfunktion durch die Chipkarte nur dann erfolgt, wenn die Authentisierungsdaten des Benutzers mit auf der Chipkarte gespeicherten Referenzdaten (102, 104) übereinstimmen und wenn die kryptografische Authentisierung des Lesegeräts gegenüber der Chipkarte erfolgreich durchgeführt worden ist,
wobei von dem Lesegerät eine Information an die Chipkarte übertragen wird,
**dadurch gekennzeichnet, dass** durch die Information spezifiziert ist, wie die Erfassung der Authentisierungsdaten durch das Lesegerät erfolgt, wobei die Freischaltung der Chipkartenfunktion durch die Chipkarte nur dann erfolgt, wenn die durch die Information spezifizierte Erfassung der Authentisierungsdaten von dem Benutzer durch das Lesegerät eine Anforderung der Chipkarte erfüllt, wobei das Lesegerät für die kryptografische Authentisierung gegenüber der Chipkarte ein Zertifikat (141) an die Chipkarte überträgt, wobei das Zertifikat (141) eines von verschiedenen in einem Speicher (124) des Lesegeräts gespeicherten Zertifikaten (141) ist, die über eine Zuordnungstabelle (166) jeweils einem Chipkartentyp zugeordnet sind und sich durch die jeweils beinhaltete Information hinsichtlich der Art und Weise der Erfassung der Authentisierungsdaten unterscheiden, und
- Erfassung der Authentisierungsdaten durch das Lesegerät (118) in der Weise, die durch die in dem ausgewählten Zertifikat (141) beinhaltete Information spezifiziert ist.

2. Verfahren nach Anspruch 1, wobei durch die Information spezifiziert ist, dass die Authentisierungsdaten über eine Tastatur des Lesegeräts von dem Benutzer erfasst werden und/oder dass die Authentisierungsdaten aus sensorisch von dem Lesegerät erfassten biometrischen Daten des Benutzers abgeleitet werden.

3. Verfahren nach einem der vorhergehenden Ansprüche, wobei die Erfassung der Authentisierungsdaten von dem Benutzer durch Erfassung von biometrischen Daten (126) von dem Benutzer mit Hilfe des Chipkarten-Lesegeräts erfolgt, wobei aus den biometrischen Daten eine Kennung von dem Chipkarten-Lesegerät abgeleitet wird, und wobei es sich bei der Kennung um die Authentisierungsdaten handelt, die von dem Chipkarten-Lesegerät an die Chipkarte übertragen werden.

4. Verfahren nach einem der vorhergehenden Ansprüche, mit folgenden weiteren Schritten:
- Prüfung, ob sich die Chipkarte in einem Erstbenutzungsstatus befindet,
- Überführung der Chipkarte von dem Erstbenutzungsstatus in einen Benutzt-Status durch Übertragung der Authentisierungsdaten von dem Lesegerät an die Chipkarte.

5. Verfahren nach einem der vorhergehenden Ansprüche, wobei es sich bei den Authentisierungsdaten um eine Kennung handelt, die aus von dem Benutzer sensorisch durch das Chipkarten-Lesegerät erfassten biometrischen Daten abgeleitet ist, und wobei die Kennung nach deren Ableitung aus den biometrischen Daten temporär auf einer Anzeigevorrichtung des Lesegeräts angezeigt wird, wobei die biometrischen Daten nach der Ableitung der Kennung vorzugsweise aus einem Arbeitsspeicher des Lesegeräts gelöscht werden.

6. Lesegerät (118) für eine Chipkarte (100) mit
- Mitteln (122, 142) zur Erfassung von Authentisierungsdaten von einem Benutzer,
- Mitteln (138, 141) zur kryptografischen Authentisierung des Lesegeräts (118) gegenüber der Chipkarte (100),
- Freischaltungsmitteln (136), die geeignet sind zur Freischaltung einer Chipkartenfunktion (116) der Chipkarte (100) mit Hilfe der Authentisierungsdaten, wenn diese Freischaltung der Chipkartenfunktion die erfolgreiche kryptografische Authentisierung des Lesegeräts gegenüber der Chipkarte voraussetzt,
- Kommunikationsmitteln (120, 144) zur Ermöglichung einer Kommunikation zwischen einem Computer (146) und der Chipkarte (100) zur Nutzung der Chipkartenfunktion durch den Computer,
- einem Speicher (124) zur Speicherung einer Information, wobei das Lesegerät (118) dazu ausgebildet ist, die Information an die Chipkarte (100) zu übertragen,
**dadurch gekennzeichnet, dass** die Information spezifiziert, wie die Erfassung der Authentisierungsdaten durch das Lesegerät (118) erfolgt, wobei die Freischaltung der Chipkartenfunktion durch die Chipkarte (100) nur dann erfolgt, wenn die Information eine Anforderung der Chipkarte erfüllt, wobei die Information in einem Zertifikat (141) beinhaltet ist, wobei das Zertifikat (141) eines von verschiedenen in dem Speicher (124) gespeicherten Zertifikaten (141) ist, wobei die gespeicherten Zertifikate (141) über eine Zuordnungstabelle (166) jeweils einem Chipkartentyp zugeordnet sind und sich durch die darin beinhaltete Information hinsichtlich der Art und Weise der Erfassung der Authentisierungsdaten unterscheiden.

7. Lesegerät nach Anspruch 6, wobei die Mittel zur kryptografischen Authentisierung für eine gegenseitige kryptografische Authentisierung des Lesegeräts und der Chipkarte ausgebildet sind, wobei die Mittel zur kryptografischen Authentisierung beispielsweise zur Durchführung eines Challenge-Response-Verfahrens ausgebildet sind.

8. Lesegerät nach einem der vorhergehenden Ansprüche 6 oder 7, wobei durch die Information spezifiziert ist, dass die Authentisierungsdaten über eine Tastatur des Lesegeräts von dem Benutzer erfasst werden und/oder dass die Authentisierungsdaten aus sensorisch von dem Lesegerät erfassten biometrischen Daten des Benutzers abgeleitet werden.

9. Lesegerät nach einem der vorhergehenden Ansprüche 6 bis 8, wobei die Mittel zur Erfassung von Authentisierungsdaten (122) zur Erfassung biometrischer Daten (126) von dem Benutzer ausgebildet sind, und mit Ableitungsmitteln (128, 130) zur Ableitung der Authentisierungsdaten (104) aus den biometrischen Daten, wobei die Ableitungsmitteln zur Ausführung einer Einwegfunktion ausgebildet sind, um aus den biometrischen Daten die Authentisierungsdaten abzuleiten, wobei es sich vorzugsweise bei der Einwegfunktion um eine HASH-Funktion handelt, die dazu ausgebildet ist, aus den biometrischen Daten einen HASH-Wert (102) als Kennung (104) abzuleiten, wobei vorzugsweise die Ableitungsmittel einen Speicherbereich zur Speicherung von Programminstruktionen aufweisen und mit Aktualisierungsmitteln (160) zum Empfang von Aktualisierungsdaten (154) für eine Aktualisierung der Programminstruktionen ausgestattet sind, und wobei vorzugsweise die Information eine Version der Programminstruktionen spezifiziert.

10. Lesegerät nach einem der vorhergehenden Ansprüche 6 bis 9, mit Prüfungsmitteln (132) zur Prüfung, ob sich die Chipkarte in einem Erstbenutzungsstatus befindet, und Überführungsmitteln (134) zur Überführung der Chipkarte in einen Benutzt-Status mit Hilfe der Authentisierungsdaten, wenn der Erstbenutzungsstatus der Chipkarte vorliegt, wobei die Überführungsmittel beispielsweise so ausgebildet sind, dass die Authentisierungsdaten als initiale Authentisierungsdaten zu der Chipkarte übertragen werden, nachdem der Erstbenutzungsstatus der Chipkarte festgestellt worden ist, um die Chipkarte von dem Erstbenutzungsstatus in den Benutzt-Status zu überführen, und vorzugsweise mit einer Anzeigevorrichtung (140) zur temporären Anzeige der Authentisierungsdaten.

11. Lesegerät nach einem der vorhergehenden Ansprüche 6 bis 10, wobei die Erfassungsmittel zumindest einen ersten Sensor (122.1) zur Erfassung eines ersten biometrischen Merkmals und einen zweiten Sensor (122.2) zur Erfassung eines zweiten biometrischen Merkmals aufweisen, wobei der erste Sensor einem ersten Chipkartentyp und der zweite Sensor einem zweiten Chipkartentyp zugeordnet ist, und mit Abfragemitteln (168) zur Abfrage des Chipkartentyps von der Chipkarte, wobei die Erfassungsmittel so ausgebildet sind, dass in Abhängigkeit von dem Chipkartentyp der Chipkarte der erste Sensor oder der zweite Sensor für die Erfassung der biometrischen Daten ausgewählt wird.

12. Lesegerät nach Anspruch 11, wobei dem ersten Sensor eine erste Einwegfunktion (130.1) zugeordnet ist und wobei dem zweiten Sensor eine zweite Einwegfunktion (130.2) zugeordnet ist, wobei die Ableitungsmittel so ausgebildet sind, dass für die Ableitung der Kennung die erste Einwegfunktion verwendet wird, wenn die Erfassung der biometrischen Daten durch den ersten Sensor erfolgt ist, und dass zur Ableitung der Kennung die zweite Einwegfunktion verwendet wird, wenn die Erfassung der biometrischen Daten von dem zweiten Sensor erfolgt ist.

13. Lesegerät nach einem der vorhergehenden Ansprüche 6 bis 11, wobei die Freischaltungsmittel so ausgebildet sind, dass damit die Freischaltung der Chipkartenfunktion mittels einer Fernüberprüfung unterstützt wird.

14. Computerprogrammprodukt, insbesondere digitales Speichermedium, mit von einem Computer (146) und/oder einem Lesegerät (118) ausführbaren Instruktionen zur Durchführung eines Verfahrens nach einem der Ansprüche 1 bis 5.

## Claims

1. A method for releasing a smart card function (116) of a smart card (100), said method comprising the following steps:
- capturing authentication data (104; 127) from a user with the aid of a smart card reader (118),
- cryptographically authenticating the reader to the smart card,
- transmitting the authentication data of the user from the reader to the smart card in order to release the smart card function in order to enable a use of the smart card function by a computer (146) connected to the reader,
wherein the smart card function is released by the smart card only if the authentication data of the user match reference data (102, 104) stored on the smart card and if the cryptographic authentication of the reader to the smart card has been carried out successfully,
wherein information is transmitted from the reader to the smart card,
**characterised in that** the information specifies how the authentication data are captured by the reader, wherein the smart card function is released by the smart card only if the capture of the authentication data from the user by the reader as specified by the information meets a requirement of the smart card, wherein the reader transmits a certificate (141) to the smart card for the cryptographic authentication to the smart card, wherein the certificate (141) is one of various certificates (141) stored in a memory (124) of the reader, which certificates are each allocated a smart card type via an allocation table (166) and differ from one another in terms of the contained information with regard to the way in which the authentication data are captured, and
- capturing the authentication data by the reader (118) in the way specified by the information contained in the selected certificate (141).

2. The method according to claim 1, wherein the information specifies that the authentication data are captured from the user via a keypad of the reader and/or that the authentication data are derived from biometric data of the user captured in a sensory manner by the reader.

3. The method according to any one of the preceding claims, wherein the authentication data are captured from the user by capturing biometric data (126) from the user with the aid of the smart card reader, wherein an identifier of the smart card reader is derived from the biometric data, and wherein the identifier is the authentication data transferred from the smart card reader to the smart card.

4. The method according to any one of the preceding claims, having the following further steps:
- checking whether the smart card is in a first-use state,
- transferring the smart card from the first-use state into a used state by transmitting the authentication data from the reader to the smart card.

5. The method according to any one of the preceding claims, wherein the authentication data is an identifier which is derived from biometric data captured from the user by the smart card reader in a sensory manner, and wherein the identifier is displayed temporarily on a display device of the reader after having been derived from the biometric data, wherein the biometric data, once the identifier has been derived, are preferably deleted from a working memory of the reader.

6. A reader (118) for a smart card (100), comprising
- means (122, 142) for capturing authentication data from a user,
- means (138, 141) for cryptographically authenticating the reader (118) to the smart card (100),
- release means (136), which are suitable for releasing a smart card function (116) of the smart card (100) with the aid of the authentication data, if this release of the smart card function presupposes the successful cryptographic authentication of the reader to the smart card,
- communication means (120, 144) for enabling a communication between a computer (146) and the smart card (100) for use of the smart card function by the computer,
- a memory (124) for storing information, wherein the reader (118) is designed to transmit the information to the smart card (100),
**characterised in that** the information specifies how the authentication data are captured by the reader (118), wherein the smart card function is released by the smart card (100) only if the information meets a requirement of the smart card, wherein the information is contained in a certificate (141), wherein the certificate (141) is one of various certificates (141) stored in the memory (124), wherein the stored certificates (141) are each allocated a smart card type via an allocation table (166) and differ from one another by the information contained therein with regard to the way in which the authentication data are captured.

7. The reader according to claim 6, wherein the means for cryptographic authentication are designed for a mutual cryptographic authentication of the reader and the smart card, wherein the means for cryptographic authentication by way of example are designed to carry out a challenge-response method.

8. The reader according to either one of the preceding claims 6 or 7, wherein the information specifies that the authentication data are captured from the user via a keypad of the reader and/or that the authentication data are derived from biometric data of the user captured in a sensory manner by the reader.

9. The reader according to any one of the preceding claims 6 to 8, wherein the means for capturing authentication data (122) are designed to capture biometric data (126) from the user, and are equipped with derivation means (128, 130) for deriving the authentication data (104) from the biometric data, wherein the derivation means are designed to execute a one-way function in order to derive the authentication data from the biometric data, wherein the one-way function is preferably a HASH function, which is designed to derive a HASH value (102) as identifier (104) from the biometric data, wherein the derivation means preferably have a memory region for storing program instructions, and are equipped with update means (160) for receiving update data (154) for updating the program instructions, and wherein the information preferably specifies a version of the program instructions.

10. The reader according to any one of the preceding claims 6 to 9, comprising inspection means (132) for checking whether the smart card is in a first-use state, and transfer means (134) for transferring the smart card into a used state with the aid of the authentication data if the first-use state of the smart card is present, wherein the transfer means by way of example are designed such that the authentication data are transmitted as initial authentication data to the smart card, once the first-use state of the smart card has been determined, in order to transfer the smart card from the first-use state into the used state, and preferably comprising a display device (140) for temporarily displaying the authentication data.

11. The reader according to any one of the preceding claims 6 to 10, wherein the capture means comprise at least one first sensor (122.1) for capturing a first biometric feature and a second sensor (122.2) for capturing a second biometric feature, wherein the first sensor is allocated a first smart card type and the second sensor is allocated a second smart card type, and comprising query means (168) for querying the smart card type from the smart card, wherein the capture means are designed such that the first sensor or the second sensor is selected for the capture of the biometric data, depending on the smart card type of the smart card.

12. The reader according to claim 11, wherein a first one-way function (130.1) is allocated to the first sensor, and wherein a second one-way function (130.2) is allocated to the second sensor, wherein the derivation means are designed such that the first one-way function is used for deriving the identifier if the biometric data have been captured by the first sensor, and such that the second one-way function is used to derive the identifier if the biometric data have been captured by the second sensor.

13. The reader according to any one of the preceding claims 6 to 11, wherein the release means are designed such that the release of the smart card function is assisted therewith by means of a remote inspection.

14. A computer program product, in particular a digital storage medium, comprising instructions, which can be executed by a computer (146) and/or a reader (118), for carrying out a method according to any one of claims 1 to 5.

## Revendications

1. Procédé de libération d'une fonction de carte à puce (116) d'une carte à puce (100) avec les étapes suivantes :
- saisie de données d'authentification (104 ; 127) d'un utilisateur à l'aide d'un lecteur de cartes à puce (118),
- authentification cryptographique du lecteur par rapport à la carte à puce,
- transfert des données d'authentification de l'utilisateur du lecteur vers la carte à puce pour la libération de la fonction de carte à puce, afin de permettre une utilisation de la fonction de carte à puce par un ordinateur (146) en connexion avec le lecteur,
où la libération de la fonction de carte à puce par la carte à puce n'a lieu que lorsque les données d'authentification de l'utilisateur sont en concordance avec les données de référence (102, 104) mémorisées sur la carte à puce et lorsque l'authentification cryptographique du lecteur a été réalisée avec succès vis-à-vis de la carte à puce,
où une information est transférée du lecteur vers la carte à puce,
**caractérisé en ce**
**qu'**il est précisé par l'information la manière dont les données d'authentification sont saisies par le lecteur, où la libération de la fonction de carte à puce par la carte à puce n'a lieu que lorsque la saisie des données d'authentification de l'utilisateur précisée par l'information satisfait à une exigence de la carte à puce, où le lecteur transfère un certificat (141) vers la carte à puce pour l'authentification cryptographique vis-à-vis de la carte à puce, où le certificat (141) est l'un des divers certificats (141) mémorisés dans une mémoire (124) du lecteur, qui sont associés respectivement à un type de carte à puce par l'intermédiaire d'un tableau d'affectation (166) et qui se différentient par l'information respectivement contenue en ce qui concerne l'art et la manière pour la saisie des données d'authentification, et
- la saisie des données d'authentification par le lecteur (118) dans la manière qui est précisée par l'information contenue dans le certificat (141) choisi.

2. Procédé selon la revendication 1, dans lequel il est précisé par l'information que les données d'authentification sont saisies par l'intermédiaire d'un clavier du lecteur par l'utilisateur et/ou que les donnés d'authentification sont déduites à partir de données biométriques de l'utilisateur saisies de manière sensorielle par le lecteur.

3. Procédé selon l'une des revendications précédentes, dans lequel la saisie des données d'authentification de l'utilisateur s'effectue par la saisie de données biométriques (126) de l'utilisateur à l'aide du lecteur de carte à puce, où un identifiant est déduit des données biométriques par le lecteur de carte à puce, et où il s'agit des données d'authentification dans le cas de l'identifiant, qui sont transmises du lecteur de carte à puce vers la carte à puce.

4. Procédé selon l'une des revendications précédentes, avec les étapes complémentaires suivantes :
- vérification si la carte à puce se trouve dans un état de première utilisation,
- passage de la carte à puce de l'état de première utilisation dans un état d'utilisation par la transmission des données d'authentification du lecteur vers la carte à puce.

5. Procédé selon l'une des revendications précédentes, dans lequel, dans le cas des données d'authentification, il s'agit d'un identifiant qui est déduit à partir de données biométriques saisies de manière sensorielle par l'utilisateur par le lecteur de carte à puce, et où l'identifiant est indiqué temporairement sur un dispositif d'affichage du lecteur après sa déduction à partir des données biométriques, où les données biométriques sont de préférence effacées après la déduction de l'identifiant à partir de la mémoire de travail du lecteur.

6. Lecteur (118) pour une carte à puce (100) avec
- des moyens (122, 142) pour la saisie de données d'authentification d'un utilisateur,
- des moyens (138, 141) pour l'authentification cryptographique du lecteur (118) par rapport à la carte à puce (100),
- des moyens de libération (136), qui sont appropriés pour la libération d'une fonction de carte à puce (116) de la carte à puce (100) à l'aide des données d'authentification, si cette libération de la fonction de carte à puce sous-entend l'authentification cryptographique réussie du lecteur par rapport à la carte à puce,
- des moyens de communication (120, 144) pour la possibilité d'une communication entre un ordinateur (146) et la carte à puce (100) pour l'utilisation de la fonction de carte à puce par l'ordinateur,
- une mémoire (124) pour le stockage d'une information, où le lecteur (118) est conçu pour transmettre l'information à la carte à puce (100),
**caractérisé en ce que**
l'information précise la manière dont est réalisée la saisie des données d'authentification par le lecteur (118), où la libération de la fonction de carte à puce n'est réalisée par la carte à puce (100) que si l'information satisfait à une exigence de la carte à puce, où l'information est contenue dans un certificat (141), où le certificat (141) est l'un des divers certificats (141) stockés dans la mémoire (124), où les certificats (141) stockés sont associés respectivement à un type de carte à puce par l'intermédiaire d'un tableau d'affectation (166) et se différentient par l'information concernant l'art et la manière de saisir les données d'authentification y étant contenues.

7. Lecteur selon la revendication 6, dans lequel les moyens pour l'authentification cryptographique sont conçus pour une authentification cryptographique réciproque du lecteur et de la carte à puce, où les moyens pour l'authentification cryptographique sont, par exemple, conçus pour l'exécution d'un procédé de question-réponse.

8. Lecteur selon l'une des revendications précédentes 6 ou 7, dans lequel il est précisé par l'information que les données d'authentification sont saisies par l'utilisateur par l'intermédiaire d'un clavier du lecteur et/ou que les données d'authentification sont déduites à partir de données biométriques de l'utilisateur saisies de manière sensorielle par le lecteur.

9. Lecteur selon l'une des revendications précédentes 6 à 8, dans lequel les moyens pour la saisie de données d'authentification (122) sont conçus pour la saisie de données biométriques (126) par l'utilisateur, et avec des moyens de déduction (128, 130) pour la déduction des données d'authentification (104) à partir des données biométriques, où les moyens de déduction sont conçus pour l'exécution d'une fonction à sens unique afin de déduire les données d'authentification à partir des données biométriques, où, de préférence, il s'agit d'une fonction de hachage HASH dans le cas de la fonction à sens unique, qui est conçue pour déduire à partir des données biométriques une valeur de hachage HASH (102) en tant qu'identifiant (104), où, de préférence, les moyens de déduction présentent une zone de mémoire pour le stockage d'instructions de programme et sont équipés de moyens d'actualisation (150) pour la réception de données d'actualisation (154) pour une mise à jour des instructions de programme, et où, de préférence, l'information précise une version des instructions de programme.

10. Lecteur selon l'une des revendications précédentes 6 à 9, avec des moyens de vérification (132) pour la vérification si la carte à puce est dans un état de première utilisation, et des moyens de transfert (134) pour le transfert de la carte à puce dans un état d'utilisation à l'aide des données d'authentification lorsque l'état de première utilisation de la carte à puce est présent, où les moyens de transfert sont par exemple conçus de manière que les données d'authentification sont transférées vers la carte à puce en tant que données d'authentification initiales, après qu'un état de première utilisation de la carte à puce ait été constaté afin de transférer la carte à puce de l'état de première utilisation dans l'état d'utilisation, et de préférence avec un dispositif d'affichage (140) pour l'affichage temporaire des données d'authentification.

11. Lecteur selon l'une des revendications précédentes 6 à 10, dans lequel les moyens de saisie présentent au moins un premier capteur (122.1) pour la saisie d'une première caractéristique biométrique et un deuxième capteur (122.2) pour la saisie d'une deuxième caractéristique biométrique, où le premier capteur est associé à un premier type de carte à puce et le deuxième capteur est associé à un deuxième type de carte à puce, et avec des moyens de questionnement (168) pour l'interrogation du type de carte à puce de la carte à puce, où les moyens de saisie sont conçus de telle manière qu'en fonction du type de carte à puce de la carte à puce, le premier capteur ou le deuxième capteur est choisi pour la saisie des données biométriques.

12. Lecteur selon la revendication 11, dans lequel une première fonction à sens unique (130.1) est associée au premier capteur et dans lequel une deuxième fonction à sens unique (130.2) est associée au deuxième capteur, où les moyens de déduction sont conçus de manière que, pour la déduction de l'identifiant, la première fonction à sens unique est employée lorsque la saisie des données biométriques a été effectuée par le premier capteur, et que, pour la déduction de l'identifiant, la deuxième fonction à sens unique est employée lorsque la saisie des données biométriques a été effectuée par le deuxième capteur.

13. Lecteur selon l'une des revendications précédentes 6 à 11, dans lequel les moyens de libération sont conçus de telle manière que la libération de la fonction de carte à puce est secondée au moyen d'une vérification à distance.

14. Produit de programme informatique, en particulier moyen de stockage numérique avec des instructions exécutables par un ordinateur (146) et/ou un lecteur (118) pour l'exécution d'un procédé selon l'une des revendications 1 à 5.
